# EUROPÄISCHE PATENTSCHRIFT

(11) **EP 1 339 284 B1**
(45) Veröffentlichungstag und Bekanntmachung des Hinweises auf die Patenterteilung: **08.09.2004**
(21) Anmeldenummer: 01989578.8
(22) Anmeldetag: 05.12.2001
(51) Int. Cl.: A01N 33/12, A01N 43/40, A01N 43/84

(54) **MITTEL AUF BASIS EINER HOMOGENEN PHASE UND DEREN STABILISIERUNG DURCH AMMONIUMNITRAT SOWIE VERWENDUNG DER MITTEL ALS BIOREGULATOREN**
AGENTS BASED ON A HOMOGENOUS PHASE, AND STABILISATION THEREOF WITH AMMONIUM NITRATE AND USE OF SAID AGENTS AS BIOREGULATORS
SUBSTANCES A BASE D'UNE PHASE HOMOGENE ET LEUR STABILISATION A L'AIDE DE NITRATE D'AMMONIUM, ET UTILISATION DESDITES SUBSTANCES EN TANT QUE BIOREGULATEURS

(30) Priorität: 05.12.2000 DE 10060383
(43) Veröffentlichungstag der Anmeldung: 03.09.2003
(73) Patentinhaber: BASF AKTIENGESELLSCHAFT, 67056 Ludwigshafen (DE)
(72) Erfinder: KOBER, Reiner, 67136 Fussgönheim (DE); RADEMACHER, Wilhelm, 67117 Limburgerhof (DE); FRICKE, Hans-Michael, 67117 Limburgerhof (DE)
(74) Vertreter: Kinzebach, Werner, Dr.
(86) Internationale Anmeldenummer: PCT/EP2001/014289
(87) Internationale Veröffentlichungsnummer: WO 2002/045504

(56) Entgegenhaltungen:
- WO-A-00/07445

## Beschreibung

Die vorliegende Erfindung betrifft Mittel auf Basis einer homogenen, wässrigen und wenigstens einen Wirkstoff aus der Klasse der quaternierten Ammoniumverbindungen, Ethylenoxid/Propylenoxid-Blockcopolymere und Ammoniumnitrat enthaltenden Phase. Weitere Wirkstoffe können eingearbeitet werden. Die homogene Phase wird durch Ammoniumnitrat stabilisert. Die Verwendung der Mittel als Bioregulatoren wird beschrieben.

Neben der Optimierung der Wirkstoffeigenschaften kommt mit Blick auf eine industrielle Produktion und Anwendung dieser Wirkstoffe der Entwicklung eines effizienten Mittels besondere Bedeutung zu. Durch eine sachgerechte Formulierung des oder der Wirkstoffe muß ein optimaler Ausgleich zwischen teils gegenläufigen Eigenschaften wie der biologischen Wirksamkeit, der Toxikologie, möglichen Einflüssen auf die Umwelt und den Kosten gefunden werden. Darüber hinaus bestimmt die Formulierung zu einem erheblichen Maß die Haltbarkeit und den Anwendungskomfort eines Mittels.

Als wachstumsregulierende wirkstoffe werden auf dem Gebiet der Landwirtschaft unter anderem quaternierte Verbindungen eingesetzt, deren wichtigste Vertreter N,N,N-Trimethyl-N-β-chlorethylammoniumchlorid (CCC, Chlorcholinchlorid, Chlormequat-Chlorid, DE 12 94 734), N,N-Dimethylmorpholiniumchlorid (DMC, DE 16 42 215) und N,N-Dimethylpiperidiniumchlorid (DPC, MQC, Mepiquatchlorid, DE 22 07 575) sind. Diese Wirkstoffe, insbesondere Chlormequat-Chlorid und Mepiquat-Chlorid, werden typischerweise im Getreideanbau in vergleichsweise hohen Anwendungskonzentrationen eingesetzt. Die Aufwandmenge dieser Wirkstoffe pro Applikation beträgt in der Regel 0,3 - 1,5 kg/ha. Die Produkte sind als wäßrige Wirkstoffkonzentrate, Tabletten oder Granulate (z.B. PIX®, Cycocel® DF und Terpal-Marken als SL-Mischungen, BASF Corporation) im Handel erhältlich.

Diese Wirkstoffe aus der Klasse der quaternierten Ammoniumverbindungen können zusammen mit weiteren bioregulatorisch wirksamen Verbindungen eingesetzt werden. Beispielsweise beschreibt die EP 0 344 533 synergistische Kombinationen mit wachstumsregulierenden 3,5-Dioxo-4-propionylcyclohexancarbonsäure-Derivaten, wie Prohexadion-Calcium.

Dem Bedürfnis nach möglichst hochkonzentrierten Formulierungen dieser Wirkstoffe aus der Klasse der quaternierten Ammoniumverbindungen kann jedoch wegen ihres Elektrolytcharakters nur in begrenztem Umfang entsprochen werden. In der Regel ergeben sich Nachteile.

Beispielsweise können hochkonzentrierte, salzartige oder elektrolythaltige Flüssigformulierungen, beispielsweise die in US 4,525,200 beschriebenen und auf bestimmten kationischen und nichtionischen Tensiden basierenden Formulierungen die erwünschten Anteile an wirkungssteigernden Additiven häufig nicht in ausreichenden Mengen homogen aufnehmen. Inhomogenitäten, wie Phasentrennungen, und mögliche Anwendungsfehler sind die Folge.

Andererseits gestatten es die hohen Hygroskopizitäten der Vertreter dieser Wirkstoffklasse, insbesondere von Chlormequat-Chlorid und Mepiquat-Chlorid, nicht, preiswerte und hochkonzentrierte Feststoff-Formulierungen anbieten zu können, die darüber hinaus noch hohe Anteile an wirkungssteigernden Additiven beinhalten würden. Wenn überhaupt, sind solche Formulierungen nur in stark eingeschränkter Form möglich, z. B. im wasserlöslichen Folienbeutel.

Alternativ ließen sich EW- oder O/W (Öl-in-Wasser)-Formulierungen herstellen. Allerdings ist hier bei hohen Elektrolytanteilen die rheologische Stabilisierung problematisch und kann in der Regel durch wasserlösliche Verdickungsmittel auf Zuckerbasis, z. B. Xanthan Gum oder Cellulose-Derivate, nicht erreicht werden. Es entstehen Aufrahmungen, die zu Fehlanwendungen führen können.

Diese Problematik wird im Sinne der WO 00/07445 dadurch gelöst, daß bei Verwendung besonderer Hilfsmittel, insbesondere Alkylglucosiden und langkettigen kationischen Tensiden, weitgehend homogene SL-Formulierungen erhalten werden. So zeigt sich, daß die an sich zweiphasigen Gemische aus N,N,N-Trimethyl-N-β-chlorethyl-ammoniumchlorid und PO/EO-Blockcopolymerisaten in Wasser durch den Zusatz von 2-Ethylhexylglucosid oder Ricinolsäure-propylamidotrimethyl-ammonium-methosulfat, in homogene bis schwach trübe Gemische überführen lassen. Allerdings ist der Anteil an homogen aufnehmbaren PO/EO-Blockpolymerisaten in ungünstiger Weise begrenzt.

Die Aufgabe, stabile Flüssigformulierungen auf Basis einer wässrigen, homogenen Phase mit ausreichenden Anteilen wenigstens eines Wirkstoffs aus der Klasse der quaternierten Ammoniumverbindungen und Ethylenoxid/Propylenoxid-Blockcopolymeren anzugeben, löst die vorliegende Erfindung durch den Zusatz von Ammoniumnitrat.

Gegenstand der vorliegenden Erfindung sind daher Mittel auf Basis einer homogenen Phase, umfassend
(a) wenigstens einen Wirkstoff der Formel (I) 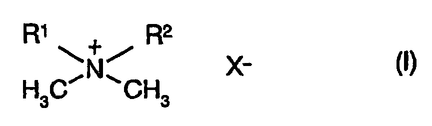 wobei R¹, R² und X die folgenden Bedeutungen haben:
   - R¹: Alkyl;
   - R²: Alkyl, Cyclopentenyl, Halogenalkyl; oder R¹ und R² zusammen einen Rest -(CH₂)₅-, -(CH₂)₂-O-(CH₂)₂- oder -(CH₂)-CH=CH-(CH₂)-NH- darstellen;
   - X: eine anionische Gruppe;
(b) Wasser;
(c) wenigstens ein gegebenenfalls Endgruppen-verschlossenes Ethylenoxid/Propylenoxid-Blockcopolymer;
(d) Ammoniumnitrat.

Die erfindungsgemäße homogene Phase ist in der Regel fluid, insbesondere flüssig. Homogen bedeutet erfindungsgemäß vor allem eine gleichmäßige Verteilung des Wirkstoffgehaltes in der Phase. In diesem Sinne ist die erfindungsgemäß erstrebenswerte Eigenschaft der Homogenität erreicht, wenn bei der praktischen Anwendung eines Mittels Fehlanwendungen aufgrund von Inhomogenitäten nicht zu erwarten sind. So kann in bestimmten Fällen die homogene Phase auch mehrere Phasen umfassen, sofern diese hinreichend fein ineinander verteilt sind. Hier sind inbesondere mikrophasige Gemische zu nennen. Vorzugsweise ist das Erscheinungsbild der homogenen Phase klar oder transparent, es kann aber auch opaque, schwach trüb, leicht trüb oder trüb sein. Trübungen können sich beispielsweise durch mikropartikuläre Hilfsstoffe, z.B. Silikone oder mineralische Bestandteile, ergeben. Auch die Viskositäten der Phase können in einem weiten Bereich variieren. Vorzugsweise sind erfindungsgemäße homogene Phasen niedrigviskos, viskos oder hochviskos. Insbesondere von Vorteil ist es, wenn die homogene Phase fließfähig ist. Diesem Aspekt zufolge bewegen sich die nach OECD Guideline 114 mit einem Viscolab LC 10-Gerät der Firma Physica oder mit einem Rheomat 115 bestimmbaren Scheinbaren Viskositäten in einem Bereich von etwa 5 mPas bis 2000 mPas, vorzugsweise etwa 10 mPas bis 500 mPas und insbesondere etwa 20 mPas bis 300 mPas.

Einem weiteren Aspekt zufolge weist die erfindungsgemäße homogene Phase eine Dichte von wenigstens 1,04 g/l und vorzugsweise von wenigstens 1,07 g/l auf. Die maximale Dichte fluider und insbesondere flüssiger homogener Phasen ergibt sich durch den Übergang in den festen Zustand.

Gemäß einer besonderen Ausführungsform weist die erfindungsgemäße homogene Phase einen gelartigen Zustand auf.

Die homogene Phase umfasst wenigstens 4 Komponenten (a), (b), (c) und (d). Ein derartiges 4-Komponentensystem ist erfindungsgemäß vorzugsweise 1-phasig.

Erfindungsgemäße Mittel basieren auf einem derartigen 4-Komponentensystem und können daher ebenfalls 1-phasig sein. Darüber hinaus können die Mittel weitere Komponenten, z.B. die erfindungsgemäßen Komponenten (e), (f) und (g), umfassen. Dabei können sich die weiteren Komponenten prinzipiell in beliebiger Form in der homogenen Phase verteilen, beispielsweise darin gelöst, dispergiert oder suspendiert sein. In bestimmten Fällen kann es dadurch zur Ausbildung einer oder mehrerer weiterer Phasen kommen, so dass in diesen Fällen auch mehrphasige, insbesondere 2- und 3-phasige Mittel erfasst werden.

Erfindungsgemäße Mittel fallen in den Bereich der Flüssigformulierungen. Hierzu gehören insbesondere wasserlösliche Konzentrate (SL-Formulierungen), Suspensionskonzentrate (SC-Formulierungen). Suspoemulsionen (SE-Formulierungen) und Mikroemulsionen.

Gemäß einer besonderen Ausführungsform werden wasserlösliche Konzentrate (SL-Formulierungen) bereitgestellt. Diese basieren auf einer erfindungsgemäßen homogenen Phase, die als fluide bzw. flüssige Phase mögliche weitere Komponenten in gelöster Form enthält.

Gemäß einer weiteren besonderen Ausführungsform der vorliegenden Erfindung werden Suspensionskonzentrate (SC) bereitgestellt. Derartige Suspensionskonzentrate basieren auf einer erfindungsgemäßen homogenen Phase, die als fluide bzw. flüssige Phase mit einer Feststoffphase vermengt ist. Vorteilhafterweise liegt der Feststoff in dispergierter Form vor. Die Ausbildung stabiler Dispersionen ist bevorzugt.

Ein fester Wirkstoff liegt in der Regel in partikulärer Form vor. Die mittlere Partikelgröße der Wirkstoffpartikel beträgt vorteilhafterweise weniger als 10 µm und insbesondere weniger als 5 µm. Dabei liegen vorteilhafte Partikelgrößen in einem Bereich von 0,1 µm bis 10 µm und insbesondere 0,5 µm bis 5 µm. Einem weiteren Aspekt zufolge können vorteilhafte Partikelgrößen-Summenverteilungen damit beschrieben werden, daß mindestens 50% der Partikel eine Partikelgröße von weniger als 100 µm, vorzugsweise von weniger als 50 µm und insbesondere von weniger als 10 µm aufweisen. Suspensionskonzentrate mit Partikelgrößen-Summenverteilungen, wonach mindestens 90% der Wirkstoffpartikel eine Partikelgröße von weniger als 10 µm und insbesondere von weniger als 5 µm aufweisen, sind besonders bevorzugt. Obige Angaben zu Partikelgrößen beziehen sich auf Messungen bei Raumtemperatur mit dem Cilas Granulometer 715 der Fa. Cilas, Marcoussis, Frankreich, wobei feststoffgesättigte Proben vermessen werden, die erforderlichenfalls mit der fluiden homogenen Phase des erfindungsgemäßen SCs verdünnt werden.

Die erfindungsgemäßen Mittel weisen ausgezeichnete Stabilitäten auf, die vor allem einen guten Anwendungskomfort bieten. So sollten die erfindungsgemäßen Mittel zumindest über die Anwendungsdauer von in der Regel wenigen Stunden unter den Anwendungsbedingungen einen bestimmten Zustand im wesentlichen beibehalten. Insbesondere ist es von Vorteil, wenn die die Komponenten (a) bis (d) umfassende Phase der Mittel wenigstens für eine Dauer von 5, vorzugsweise 8 und insbesondere 12 Stunden homogen ist. Unter dem Aspekt der Stabilität sind insbesondere diejenigen Mittel bevorzugt, bei denen im Verlauf einer 2-wöchigen Lagerung bei 54°C (CIBAC 1-MT46.1.3), einer 1-wöchigen Lagerung bei 0°C (CIPAC 1-MT39), und/oder einer 2-monatigen Lagerung bei 45°C keine nennenswerte Phasentrennung der erfindungsgemäßen homogenen Phase beobachtet wird, oder bei denen unter Umständen, z.B. bei höherer Temperatur wie den Testtemperaturen, Phasentrennungen auftreten, die sich aber durch Abkühlen und erforderlichenfalls zweckmäßiges Bewegen der Mittel wieder homogenisieren lassen (reversible Phasentrennung). Diesem Aspekt zufolge sind von den homogenen Phasen mit opaquem, schwach trübem, leicht trübem oder trübem Erscheinungsbild diejenigen bevorzugt, die diese Stabilitäten aufweisen.

Der Anteil der homogenen Phase, bezogen auf das Gesamtgewicht des Mittels, kann 100 Gew.-% betragen. Für den Fall von Suspensionskonzentraten beträgt der Anteil in der Regel 10 bis 99 Gew.-%, vorzugsweise 30 bis 95 Gew.-% und insbesondere 40 bis 80 Gew.-%.

Besondere Wirkstoffe der Formel (I) ergeben sich, wenn Alkyl für Methyl, Ethyl, Isopropyl steht. Als Halogenalkylgruppe ist die 2-Chlorethylgruppe bevorzugt. Bilden die Substituenten zusammen mit dem Stickstoffatom, an das sie gebunden sind, einen cyclischen Rest, so sind R¹ und R² bevorzugt eine Morpholino- oder Piperidinogruppe. X bedeutet beispielsweise ein Halogenid, wie Bromid und bevorzugt Chlorid; Sulfat; Alkylsulfat, wie Methylsulfat; Alkylsulfonat, wie Methylsulfonat; oder eine andere in der Landwirtschaft nutzbare anionische Gruppe. Grundsätzlich kommen auch zweiwertige anionische Gruppen in Frage, die in den entsprechenden stöchiometrischen Mengen zum Ammoniumkation eingesetzt werden.

Vorzugsweise ist der Wirkstoff der Formel I ausgewählt ist unter
(a1) N,N,N-Trimethyl-N-β-chlorethyl-ammoniumchlorid (CCC) der Formel (Ia), 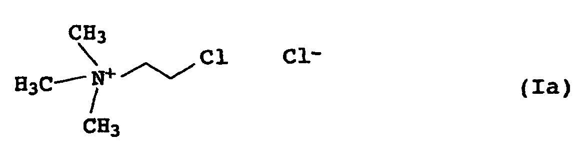
(a2) N,N-Dimethylpiperidiniumchlorid (MQC) der Formel (Ib) 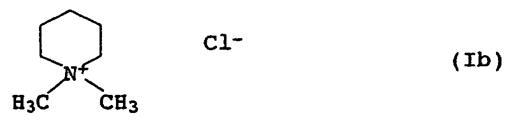 und
(a3) N,N-Dimethylmorpholiniumchlorid (DMC) der Formel (Ic)

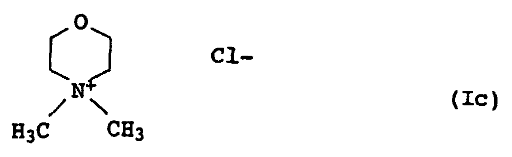

Besonders bevorzugt sind die Wirkstoffkomponeten (a1) und/oder (a2).

Gemäß einer Ausführungsform der vorliegenden Erfindung besteht die Wirkstoffkomponente (a) im wesentlichen aus einer Verbindung der Formel (Ia) oder (Ib) oder einem Gemisch davon.

Die vorliegende Erfindung betrifft vor allem Mittel mit hohen Wirkstoffanteilen (Konzentrate). So macht der Anteil der Komponente (a) am Gesamtgewicht des Mittels in der Regel mehr als 10 Gew.-%, vorzugsweise mehr als 20 Gew.-% und insbesondere mehr als 25 Gew.-% aus. Andererseits liegt der Anteil der Komponente (a) am Gesamtgewicht des Mittels zweckmäßigerweise in der Regel bei weniger als 70 Gew.-%, vorzugsweise bei weniger als 60 Ge.-% und insbesondere bei weniger als 50 Gew.-%.

Im Rahmen der vorliegenden Beschreibung sind Mengenangaben im allgemeinen auf das Gesamtgewicht des Mittels zu beziehen, sofern nicht anderes angeben ist. Der Ausdruck "im wesentlichen" bezeichnet erfindungsgemäß in der Regel ein prozentuales Verhältnis von wenigstens 90 %, vorzugsweise von wenigstens 95 % und insbesondere von wenigstens 98 %.

Die erfindungsgemäßen Mittel enthalten Wasser. Das Wasser dient vor allem zum Lösen der Wirkstoffkomponente (a). Darüber hinaus begünstigen hohe Wasseranteile die Homogenität und Fließfähigkeit von Gemischen aus Wirkstoffkomponente (a) und EO/PO-Blockcopolymeren. In der Regel ist es zweckmäßig, dass der Anteil von Wasser am Gesamtgewicht des Mittels mehr als 10 Gew.-%, vorzugsweise mehr als 20 Gew.-% und insbesondere mehr als 25 Gew.-% beträgt. Andererseits können hohe Wasseranteile die Stabilität der Mittel insbesondere dann beeinträchtigen, wenn weitere hydrolyseempfindliche Wirkstoffe, z.B. als Festphase, in die homogene Phase eingetragen sind, also z.B. bei SC-Formulierungen. Auch können sich hohe Wasseranteile durch Viskositätsverminderung ungünstig auf die Sedimentation von Feststoffanteilen auswirken. Diesen Aspekten zufolge ist es von Vorteil, wenn der Anteil an Wasser am Gesamtgewicht des Mittels weniger als 60 Gew.-%, vorzugsweise weniger als 55 Gew.-% und insbesondere weniger als 45 Gew.-% beträgt.

Die erfindungsgemäß als Komponente (c) zu verwendenden Ethylenoxid-Propylenoxid-Blockcopolymere bzw. deren Endgruppen-verschlossenen Derivate sind an sich bekannt, vgl. beispielsweise Fiedler H.P. Lexikon der Hilfsstoffe für Pharmazie, Kosmetik und angrenzende Gebiete, Editio Cantor Verlag Aulendorf, 4. Aufl. 1996 zu "Pluronics", "Poloxamer". Es handelt sich hierbei um vielfach in Pharmazie, Kosmetik, Pflanzenschutz und angrenzenden Gebieten verwendete nichtionische Tenside.

Erfindungsgemäß bevorzugt sind die gegebenenfalls Endgruppen-verschlossenen Ethylenoxid/Propylenoxid-Blockcopolymere ausgewählt unter Polymeren der Formel (IVa)

R¹⁶O-(C₂H₄O)ₚ-(C₃H₆O)_{q}-(C₂H₄O)ᵣ-R¹⁷ (IVa)

oder Polymeren der Formel (IVb)

R¹⁶O-(C₃H₆O)ₚ-(C₂H₄O)_{q}-(C₃H₆O)ᵣ-R¹⁷ (IVb)

wobei p, q, r unabhängig voneinander einem Wert im Bereich von 2 bis 300, bevorzugt 5 bis 200 und insbesondere 10 bis 150 entsprechen und R¹⁶, R¹⁷ unabhängig voneinander für Wasserstoff oder C₁-C₄-Alkyl, C₁-C₄-Alkyl-CO, insbesondere Methyl, t-Butyl und Acetyl, und weitere zum Endgruppenverschluß geeignete Gruppen stehen.

Im Vergleich zu den Blockcopolymeren der Formel (IVa) werden die Blockcopolymere der Formel (IVb) auch als inverse Blockcopolymere bezeichnet.

Vorzugsweise beträgt das gewichtsmittlere Molekulargewicht erfindungsgemäß zu verwendender Blockcopolymerer wenigstens 500, vorzugsweise wenigstens 1000 und insbesondere wenigstens 2000. In der Regel werden Blockcopolymere verwendet, deren gewichtsmittleres Molekulargewicht unterhalb von 50.000, vorzugsweise unterhalb von 25.000 und insbesondere unterhalb von 15.000 liegt. Bevorzugte Bereiche gewichtsmittlerer Molekulargewichte liegen bei 500 bis 15.000, vorzugsweise bei 1000 bis 15000 und insbesondere bei 2000 bis 10000.

Die in der Praxis verwendeten Blockcopolymere dieses Typs stellen im allgemeinen Gemische verschiedener Polymerketten dar, deren Molekulargewicht und insbesondere EO/PO-Verteilung in gewissen Grenzen variiert. Deshalb geben p, q und r den mittleren Alkoxylierungsgrad des jeweiligen Molekülabschnitts an.

Die oberflächenaktiven Eigenschaften der EO/PO-Blockcopolymere hängen von der Größe und Anordnung der EO- bzw. PO-Blöcke ab. In der Regel bilden der oder die EO-Blöcke den hydrophilen Teil des Moleküls, während der oder die PO-Blöcke den hydrophoben Teil des Moleküls bilden.

In EO/PO-Blockcopolymeren der Formel (IVa) liegt der auf das Gesamtgewicht des Blockcopolymers bezogene EO-Anteil in der Regel bei 10 bis 80 Gew.-%, wobei mit zunehmendem EO-Anteil höhere Molmassen bevorzugt sind.

In inversen EO/PO-Blockcopolymeren der Formel (IVb) beträgt der auf das Gesamtgewicht des Blockcopolymers bezogene EO-Anteil vorzugsweise mehr als 10 Gew.-% und insbesondere mehr als 20 Gew.-%.

EO/PO-Blockpolymere lassen sich in an sich bekannter Weise durch Anlagerung von Ethylenoxid an Propylenglykole bzw. Propylenoxid an Ethylenglykole herstellen. Demnach ergibt sich für die Werte von p und r in der Regel eine herstellungsbedingte Übereinstimmung.

Darüber hinaus sind viele Vertreter derartiger Blockcopolymerer und inverser Blockcopolymere im Handel erhältlich. Zu nennen sind hier beispielsweise die unter der Marke Pluronic von der BASF vertriebenen EO/PO-Blockcopolymere der Formel (IVa), insbesondere die Ausführungsformen L 121 mit 10 Gew.-% EO und einem gewichsmittleren Molekulargewicht von 4400 bzw. p+r=10; q=68; 10 R 5 mit 50 Gew.-% EO und einem gewichsmittleren Molekulargewicht von 1950 bzw. p+r=22; q=17; 17 R 5 mit 40 Gew.-% EO und einem gewichsmittleren Molekulargewicht von 2650 bzw. p+r=24; q=27; 25 R 4 mit 40 Gew.-% EO und einem gewichsmittleren Molekulargewicht von 3600 bzw. p+r=33; q=37; PE 6400 mit 40 Gew.-% EO und einem gewichtsmittleren Molekulargewicht von 2900 bzw. p+r=26; q=30, PE 6800 mit 80 Gew.-% EO und einem gewichsmittleren Molekulargewicht von 8000 bzw. p+r=145; q=28; PE 10500 mit 50 Gew.-% EO und einem gewichtsmittleren Molekulargewicht von 6500 bzw. p+r=74; q=56.

EO/PO-Blockcopolymere sind auch unter der CTFA-Bezeichnung Poloxamer bekannt. Erfindungsgemäß brauchbare Poloxamere sind beispielsweise in H.P. Fiedler: Lexikon der Hilfsstoffe für Pharmazie, Kosmetik und angrenzende Gebiete; Editio Cantor Verlag, Aulendorf, 4. überarbeitete und ergänzte Auflage (1996) 1203 genannt. Ferner sind die unter der Marke Synperonics von der Firma Uniqema/ICI, insbesondere die PE F, PE L und PE P-Typen, und die unter der Marke Genapol von der Firma Clariant, insbesondere Genapol PF 20, 80 und 10 mit 20, 80 bzw. 10 Gew.-% EO, vertriebenen EO/PO-Blockcopolymerisate zu nennen. Weiterhin können die unter der Marke Pluronic von der BASF vertriebenen inversen EO/PO-Blockcopolymere der Formel (IVb) genannt werden.

Endgruppen-verschlossene EO/PO-Blockcopolymere basieren in der Regel auf den zuvor beschriebenen Blockcopolymeren. In derartigen Endgruppen-verschlossenen Blockcopolymeren sind die endständigen Hydroxy-Gruppen mit geeigneten Gruppen umgesetzt, vorzugsweise mit C₁-C₄-Alkyl- oder -Alkoylgruppen, insbesondere Methyl-, t-Butyl-, und Acetylgruppen, verethert bzw. verestert.

Bevorzugt werden die EO/PO-Blockcopolymere der Formel (IVa).

Die EO/PO-Blockcopolymere weisen adjuvante, insbesondere wirkungsfördernde Eigenschaften auf. So ermöglicht der Zusatz derartiger Additive als Netzmittel eine beschleunigte Aufnahme von Wirkstoffen durch die Pflanze. Anteile der Komponente (c) am Gesamtgewicht des Mittels von mehr als 5 Gew.-%, vorzugsweise von mehr als 7,5 Gew.-% und insbesondere von mehr als 10 Gew.-% sind von Vorteil. Andererseits sind Anteile der Komponente (c) am Gesamtgewicht des Mittels von weniger als 50 Gew.-%, vorzugsweise von weniger als 35 Gew.-% und insbesondere von weniger als 30 Gew.-% in der Regel zweckmäßig.

Erfindungsgemäße Mittel sind insbesondere dadurch gekennzeichnet, daß die homogene Phase als Komponente (d) Ammoniumnitrat beinhaltet. Der Zusatz von Ammoniumnitrat gestattet überraschenderweise die Formulierung eines homogenen Gemisches aus den erfindungsgemäßen Komponenten (a), (b) und (c). Besonders vorteilhaft ist es, daß dies selbst bei relativ geringen Wasseranteilen gelingt.

Gegenstand der vorliegenden Erfindung ist daher auch die Verwendung von Ammoniumnitrat zur Homogenisierung eines Gemisches, umfassend
(a) wenigstens einen Wirkstoff der Formel (I)
(b) Wasser;
(c) wenigstens ein gegebenenfalls Endgruppen-verschlossenes Ethylenoxid/Propylenoxid-Blockcopolymer.

Diese Homogenisierung betrifft insbesondere die Überführung heterogener, insbesondere 2-phasiger Gemische, in homogene, insbesondere 1-phasige Gemische mit besagter Zusammensetzung. Der Zusatz von Ammoniumnitrat trägt zur Stabilisierung der erfindungsgemäßen homogenen Phase bei. Insbesondere ermöglicht die Verwendung von Ammoniumnitrat eine rheologische Stabilisierung von Gemischen aus den erfindungsgemäßen Komponenten (a), (b) und (c). So kann die viskosität in gewünschter Weise moduliert werden. Die Dichte wird erhöht, was vor allem der Sedimentation einer Feststoffphase entgegenwirkt und daher insbesondere bei SC-Formulierungen von Vorteil ist. Weiterhin ermöglicht die erfindungsgemäße Kombination aus Komponente (c) und (d) eine Formulierung, aus der selbst bei relativ geringen Wasseranteilen Ammoniumsalze, insbesondere Ammoniumchlorid, im wesentlichen nicht ausfallen. Ferner wirkt sich die Verwendung von Ammoniumnitrat positiv, insbesondere wirkungsverstärkend auf die biologische Wirksamkeit der erfindungsgemäß formulierten Bioregulatoren aus.

Der Anteil der Komponente (d) am Gesamtgewicht des Mittels macht in der Regel 5 bis 40 Gew.-%, vorzugsweise 10 bis 35 Gew.-% und insbesondere 15 bis 30 Gew.-% aus.

Gemäß einer besonderen Ausführungsform der vorliegenden Erfindung umfassen die Mittel als Komponente (e) wenigstens einen weiteren Bioregulator.

Zu brauchbaren Bioregulatoren gehören beispielsweise 3,5-Dioxo-4-propionylcyclohexancarbonsäure-Derivate, beispielsweise die in der EP 0 598 404 A1 beschriebenen.

Gemäß einer bevorzugten Ausführungsform umfassen erfindungsgemäße Mittel
(e1) wenigstens einen Wirkstoff der Formel (II) 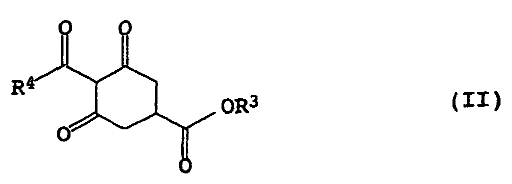 wobei R³ und R⁴ die folgenden Bedeutungen haben:
   - R³: Wasserstoff, Alkyl, Alkyl-S-Alkyl, Phenyl, substituiertes Phenyl, wobei die Substituenten vorzugsweise ausgewählt sind unter Alkyl, Halogen und Alkoxy;
   - R⁴: Alkyl, Cycloalkyl, Benzyl, substituiertes Benzyl, Phenethyl, Phenoxymethyl, 2-Thienylmethyl, Alkoxymethyl, Alkylthiomethyl, wobei die Substituenten vorzugsweise ausgewählt sind unter Alkyl, Halogen und Alkoxy;
oder ein landwirtschaftlich nutzbares Salz davon.

Vorzugsweise stehen die Reste R⁴ für Ethyl und R³ für Wasserstoff, Alkyl oder ein landwirtschaftlich nutzbares Kation, z.B. ein Alkali- oder Erdalkalimetallion, Mono-, Di- oder Trialkylammonium oder ähnliches.

Es sei bemerkt, daß die als Formel (II) bezeichnete Darstellung isomere, insbesondere tautomere Formen der dargestellten Struktur mitumfaßt. Dies wird beispielsweise anhand der Formel (IIa) illustriert.

Insbesondere bevorzugt sind die in den Tabellen 1 bis 4 der EP 0 598 404 A1 definierten Wirkstoffe, die Teil dieser Beschreibung sind. Ganz besonders bevorzugt ist als Wirkstoff der Formel (II) ein Prohexadion-Salz und insbesondere das Calciumsalz der Formel (IIa)

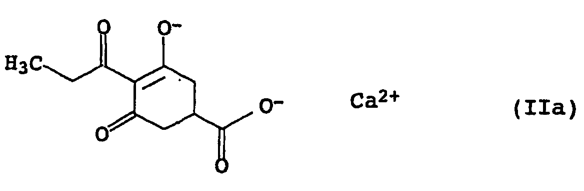

Der Anteil der Komponente (e1) am Gesamtgewicht des Mittels beträgt - soweit vorhanden - in der Regel 0,5 bis 30 Gew.-%, vorzugsweise 2 bis 25 Gew.-% und insbesondere 4 bis 20 Gew.-%.

Vorzugsweise liegt wenigstens ein Teil der insgesamt im Mittel vorhandenen Menge der Komponente (e1) als Feststoff vor. Ein anderer, in der Regel geringerer Teil kann in der homogenen Phase gelöst sein. Vorteilhafterweise beträgt der Anteil an gelöster Komponente (e1), bezogen auf die insgesamt im Mittel vorhandene Menge, weniger als 1 Gew.-%, vorzugsweise weniger als 0,5 Gew.-% und insbesondere weniger als 0,3 Gew.-%.

Brauchbare Bioregulatoren sind beispielsweise auch Gibberelline als Komponente (e2), insbesondere Wirkstoffe der Formel (IIIa) 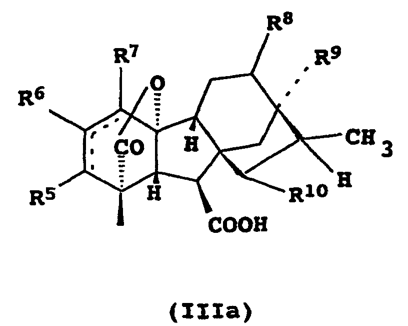 worin die Reste R⁵, R⁶, R⁷, R⁸, R⁹ und R¹⁰ unabhängig voneinander für Wasserstoff oder Hydroxyl stehen und die unterbrochene Linie eine optionale Doppelbindung entweder zwischen den Kohlenstoffatomen in Position 1 und 2 oder zwischen den Kohlenstoffatomen in Position 2 und 3 darstellt;
und Wirkstoffe der Formel (IIIb) 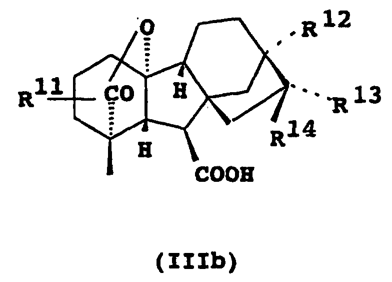 worin R¹¹ angibt, dass der A-Ring (i) keine weitere Funktionalität aufweist, oder (ii) eine 1,2-Doppelbindung oder eine 2,3-Doppelbindung aufweist oder (iii) ein 3α-oder 3β-OH, F, Cl oder Br aufweist, wobei eine 1,2-Doppelbindung vorhanden sein kann oder nicht, oder (iv) ein 1α- oder 1β-OH, F, Cl oder Br aufweist, wobei eine 2,3-Doppelbindung vorhanden sein kann oder nicht;
R¹² für H oder OH, OC(=O)R¹⁵ oder OR¹⁵ steht;
R¹³, R¹⁴ unabhängig voneinander für H, F, Cl, Br, Alkyl, Alkenyl, Cykloalkyl oder CH₂X stehen, wobei X für F, Cl oder Br steht;
R¹⁵ für Alkyl steht.

Derartige 16,17-Dihydro-Gibberelline und weitere erfindungsgemäß brauchbare Gibberelline sind beispielsweise in WO 93/03616, WO 96/06090 und insbesondere WO 00/02454 genannt. Besondere Verbindungen der Formel (IIIa) sind in der WO 00/02454 auf den Seiten 4 und 5 als Verbindungen der Formeln (II) bis (IX) definiert. Auch diese Gibberelline sind Teil der vorliegenden Beschreibung.

Insbesondere bevorzugt ist der Wirkstoff exo-16,17-Dihydro-GA5-13-acetat der Formel (IIIc)

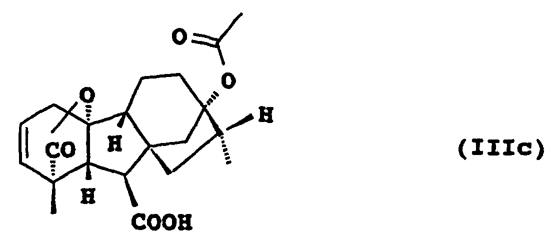

Der Anteil der Komponente (e2) am Gesamtgewicht des Mittels beträgt - soweit vorhanden - in der Regel 0,1 bis 5 Gew.-%, vorzugsweise 0,2 bis 3 Gew.-% und insbesondere 0,25 bis 1,5 Gew.-%.

In der Regel ist wenigstens ein Teil der insgesamt im Mittel vorhandenen Menge der Komponente (e2) in der homogenen Phase gelöst. Ein anderer, in der Regel geringerer Teil kann in der homogenen Phase als Feststoff vorliegen.

Gemäß einer besonderen Ausführungsform der vorliegenden Erfindung umfassen die Mittel sowohl Wirkstoffkomponente (a) als auch Wirkstoffkomponente (e1), also insbesondere Chlormequat-Chlorid und/oder Mepiquat-Chlorid der Formeln (Ia) bzw. (Ib) zusammen mit Prohexadion-Calcium der Formel (IIa). Diese Ausführungsform betrifft somit Mittel auf Basis einer bioregulatorischen Wirkstoffkombination (Kombinationspräparat). Ergänzt werden kann diese bioregulatorische Wirkstoffkombination insbesondere durch eine Wirkstoffkomponente (e2).

Die relativen Wirkstoffanteile in Kombinationspräparaten sind weitgehend variabel. Einem Aspekt zufolge enthalten die Mittel verhältnismäßig größere Gewichtsanteile an Wirkstoffkomponente (a) als an Wirkstoffkomponente (e1). Typischerweise liegt dieses Gewichtsverhältnis von (a) zu (e1) in einem Bereich von 1,5:1 bis 20:1, vorzugsweise von 2:1 bis 20:1 und insbesondere von 2,5:1 bis 10:1.

Gemäß einer besonderen Ausführungsform der vorliegenden Erfindung umfassen die Mittel als oberflächenaktive Komponente (f) wenigstens ein weiteres Tensid. Der Begriff "Tensid" bezeichnet hier grenzflächenaktive bzw. oberflächenaktive Mittel.

Die Komponente (f) dient ähnlichen Zwecken wie die Komonente (c). Insbesondere wird (f) als Dispergator bzw. Emulgator, vor allem zum Dispergieren eines Feststoffanteils in Suspensionskonzentraten, zugesetzt. Ferner können Teile der Komponente (f) als Netzmittel dienen.

Prinzipiell brauchbar sind anionische, kationische und amphotere Tenside, wobei Polymer-Tenside sowie Tenside mit Heteroatomen in der hydrophoben Gruppe eingeschlossen sind.

Zu den anionischen Tensiden gehören beispielsweise Carboxylate, insbesondere Alkali-, Erdalkali- und Ammoniumsalze von Fettsäuren, z.B. Kaliumstearat, die üblicherweise auch als Seifen bezeichnet werden; Acylglutamate; Sarkosinate, z.B. Natriumlauroylsarkosinat; Taurate; Methylcellulosen; Alkylphosphate, insbesondere Mono- und Diphosphorsäurealkylester; Sulfate, insbesondere Alkylsulfate und Alkylethersulfate; Sulfonate, weitere Alkyl- und Alkylarylsulfonate, insbesondere Alkali-, Erdalkali- und Ammoniumsalze von Arylsulfonsäuren sowie alkylsubstituierten Arylsulfonsäuren, Alkylbenzolsulfonsäuren, wie beispielsweise Ligninund Phenolsulfonsäure, Naphthalin- und Dibutylnaphthalinsulfonsäuren, oder Dodecylbenzolsulfonate, Alkylnaphthalinsulfonate, Alkylmethylestersulfonate, Kondensationsprodukte von sulfoniertem Naphthalin und Derivaten davon mit Formaldehyd, Kondensationsprodukte von Naphthalinsulfonsäuren, Phenol- und/oder Phenolsulfonsäuren mit Formaldehyd oder mit Formaldehyl und Harnstoff, Monooder Dialkyl-bernsteinsäureestersulfonate; sowie Eiweißhydrolysate und Lignin-Sulfitablaugen. Die zuvor genannten Sulfonsäuren werden vorteilhafterweise in Form ihrer neutralen oder gegebenenfalls basischen Salze verwendet.

Zu den kationischen Tensiden gehören beispielsweise quaternierte Ammoniumverbindungen, insbesondere Alkyltrimethylammonium- und Dialkyldimethylammonium-Halogenide und -alkylsulfate sowie Pyridin- und Imidazolin-Derivate, insbesondere Alkylpyridinium-Halogenide.

Zu den nichtionischen Tensiden gehören beispielsweise die Verbindungen der Formel (V), weitere Alkoxylate und vor allem Ethoxylate sowie nichtionische Tenside, insbesondere
- Fettalkohol-polyoxyethylen-ester, beispielsweise Laurylalkohol-polyoxyethylenetheracetat,
- Alkyl-Polyoxyethylen- und -polyoxypropylen-ether, z.B. von iso-Tridecylalkohol und Fettalkohol-Polyoxy-ethylenether, Alkylarylalkohol-Polyoxyethylenether, z.B. Octylphenol-Polyoxyethylenether,
- alkoxylierte tierische und/oder pflanzliche Fette und/oder Öle, beispielsweise Maisölethoxylate, Rizinusölethoxylate, Talgfettethoxylate,
- Glycerinester, wie Beispielsweise Glycerinmonostearat,
- Fettalkoholalkoxylate und Oxoalkoholalkoxylate, insbesondere vom Typ
   RO-(R₁₉O)ₓ(R₂₀O)_{y}R₂₁ mit R₁₉ und R₂₀ unabhängig voneinander = C₂H₄, C₃H₆, C₄H₈ und R₂₁ = H, oder C₁-C₁₂-Alkyl, R = C₃-C₃₀-Alkyl oder C₆-C₃₀-Alkenyl, x und y unabhängig voneinander 0 bis 50, wobei nicht beide für 0 stehen können, wie iso-Tridecylalkohol und Oleylalkohol-polyoxyethylenether,
- Alkylphenolalkoxylate, wie beispielsweise ethoxyliertes iso-Octyl-, Octyl- oder Nonyl-phenol, Tributylphenol-polyoxyethylenether,
- Fettaminalkoxylate, Fettsäureamid- und Fettsäurediethanolamidalkoxylate, insbesondere deren Ethoxylate,
- Zuckertenside, Sorbitester, wie beispielsweise Sorbitanfettsäureester (Sorbitanmonooleat, Sorbitantristearat), Polyoxyethylensorbitanfettsäureester, Alkylpolyglycoside, N-Alkylgluconamide,
- Alkylmethylsulfoxide,
- Alkyldimethylphosphinoxide, wie beispielsweise Tetradecyldimethylphosphinoxid.

Zu den amphoteren Tensiden gehören beispielsweise Sulfobetaine, Carboxybetaine und Alkyldimethylaminoxide, z.B. Tetradecyldimethylaminoxid.

Zu den polymeren Tensiden gehören beispielsweise Di-, Tri- und Multiblockpolymere vom Typ (AB)ₓ, ABA und BAB, z.B. Polystyrol-Block-Polyethylenoxid, und AB-Kammpolymere, z.B. Polymethacrylatcomb-Polyethylenoxid.

Weitere Tenside, die hier beispielhaft genannt werden sollen, sind Perfluortenside, Silikontenside, Phospholipide, wie beispielsweise Lecithin oder chemisch modifizierte Lecithine, Aminosäuretenside, z.B. N-Lauroylglutamat und oberflächenaktive Homound Copolymere, z.B. Polyvinylpyrrolidon, Polyacrylsäuren in Form ihrer Salze, Polyvinylalkohol, Polypropylenoxid, Polyethylenoxid, Maleinsäureanhydrid-Isobuten-Copolymere und Vinylpyrrolidon-Vinylacetat-Copolymere.

Sofern nicht spezifiziert, handelt es sich bei den Alkylketten der oben aufgeführten Tenside um lineare oder verzweigte Reste mit üblicherweise 8 bis 20 Kohlenstoffatomen.

Vorzugsweise ist das weitere Tensid im Rahmen der Komponente (f) ausgewählt unter nichtionischen Tensiden. Hiervon sind insbesondere bevorzugt
(f1) nichtionische Tenside der Formel (V),

   [R¹⁸-CO-(EO)ₓ-]_{y}A¹ (V)

   wobei R¹⁸ für einen geradkettigen oder verzweigten, gesättigten oder ungesättigten, gegebenenfalls monooder dihydroxylierten aliphatischen Rest mit 8 bis 30 Kohlenstoffatomen steht, die Summe aller x Null bis 100 beträgt, y für 1 bis 7 steht, A¹ für Hydroxy oder Alkoxy steht, wenn y für 1 steht, oder A¹ von einem Polyol abgeleitetet ist, wenn y für 2 bis 7 steht.

Hierbei handelt es sich um gegebenenfalls ethoxylierte Carbonsäuren und Ester mono- oder polyfunktioneller Alkohole (Polyole).

Der Rest R¹⁸ leitet sich insbesondere von Fettsäureresten ab, beispielsweise den oben genannten, so daß R¹⁸ zweckmäßigerweise für einen geradkettigen oder - insbesondere 1- bis 2-fach - verzweigten, gesättigten oder - insbesondere einfach, zweifach oder dreifach - ungesättigten, gegebenenfalls mono- oder dihydroxylierten aliphatischen Rest mit 8 bis 30, vorzugsweise 12 bis 24 und insbesondere 10 bis 24 Kohlenstoffatomen steht. Insbesondere gehören hierzu Palmityl, Stearyl, Arachidyl, Hexadecenyl, Oleyl, Linolyl, Linolenyl, Rizinoleyl, Eicosanyl sowie Mono- und Dihydroxystearyl, von denen Rizinoleyl und Oleyl bevorzugt sind.

Sind die nichtionischen Tenside der Formel (V) ethoxyliert, so gibt die Summe aller x die mittlere Ethoxylierungszahl mit in der Regel 3 bis 100 und insbesondere 5 bis 50 an.

Steht A¹ für Hydroxy, so ist y = 1 und die mittlere Ethoxylierungszahl beträgt vorteilhafterweise 5 bis 50 und vorzugsweise 15 bis 40. Insbesondere sind in diesem Zusammenhang entsprechende Rhizinusöl- und Ölsäurepolyethoxylate zu nennen.

Steht A¹ für gegebenenfalls verzweigtes Alkyloxy mit 1 bis 4 und vorzugsweise 1 oder 2 Kohlenstoffatomen, so ist y = 1 und die mittlere Ethoxylierungszahl beträgt 3 bis 100 und vorzugsweise 20 bis 50.

Ist A¹ von einem Polyol mit 3 bis 7 und insbesondere 6 Kohlenstoffatomen abgeleitet, so beträgt der Wert von y = 2 bis 7 und vorzugsweise 3 bis 6. Dabei sind y Hydroxywasserstoffatome des Rests A¹ durch jeweils einen Rest R¹⁸-CO-(EO)ₓ- ersetzt, wobei mehrere Reste R¹⁸ und mehrere Indizes x gleich oder verschieden sein können. Vorzugsweise sind mehrere Reste R¹⁸ gleich, während die Indizes x verschieden sein können und in der Regel einer Gauß-Verteilung folgen. Insbesondere leitet sich A¹ von einem Zukkeralkohol, wie Sorbitol oder Glycerin ab. Eine bevorzugte Bedeutung von A¹ ist Sorbitol. Sofern ethoxyliert, beträgt die mittlere Ethoxylierungszahl 5 bis 50 und vorzugsweise 15 bis 40. Insbesondere sind in diesem Zusammenhang die entsprechenden Sorbitolpolyethoxyoleate und -(iso)stearate zu nennen.

Ganz besonders bevorzugt werden im Rahmen der Komponente (f1) Rizinusölpolyethoxylate, Sorbitolpolyethoxyoleate und Gemische davon.

Der Anteil der Komponente (f), insbesondere der Komponete (f1), am Gesamtgewicht des Mittels beträgt - sofern vorhanden - in der Regel 0,5 bis 30 Gew.-%, vorzugsweise 1 bis 25 Gew.-% und insbesondere 5 bis 15 Gew.-%.

Gemäß einer besonderen Ausführungsform der vorliegenden Erfindung umfassen die Mittel als Komponente (g) mindestens einen weiteren Hilfsstoff.

Die Komponente (g) kann vielerlei Zwecke erfüllen. Die Wahl geeigneter Hilfsstoffe erfolgt den Anforderungen entsprechend üblicherweise durch den Fachmann.

Beispielsweise sind weitere Hilfsstoffe ausgewählt unter
(g1) Calcium-Salzen;
(g2) Chelatbildnern;
(g3) Harnstoff;
(g4) weiteren Lösungs- oder Verdünnungsmitteln;

Zu den Calcium-Salzen gehören Salze anorganischer und organischer Säuren, insbesondere Hydroxide, Nitrate und Halogenide anorganischer Säuren bzw. Carbonate und Sulfonate organischer Carbonsäuren und Sulfonsäuren. Vorzugsweise sind die Calcium-Salze in der homogenen Phase löslich.

Sofern vorhanden, beträgt der Anteil der Komponente (g1) am Gesamtgewicht des Mittels in der Regel 0,1 bis 7,5 Gew.-%, vorzugsweise 0,2 bis 5 Gew.-% und insbesondere 0,4 bis 3 Gew.-%.

Bevorzugte Chelatbildner sind Schwermetall- und insbesondere Übergangsmetall-komplexierende Verbindungen, z.B. EDTA und dessen Derivate.

Sofern vorhanden, beträgt der Anteil der Komponente (g2) am Gesamtgewicht des Mittels in der Regel 0,001 bis 0,5 Gew.-%, vorzugsweise 0,005 bis 0,2 Gew.-% und insbesondere 0,01 bis 0,1 Gew.-%.

Sofern vorhanden, beträgt der Anteil der Komponente (g3) am Gesamtgewicht des Mittels in der Regel 2 bis 30 Gew.-%, vorzugsweise bis zu 25 Gew.-% und insbesondere bis zu 20 Gew.-%.

Neben Wasser können die Mittel weitere Lösungsmittel löslicher Bestandteile bzw. Verdünnungsmittel unlöslicher Bestandteile des Mittels umfasssen.

Prinzipiell brauchbar sind beispielsweise Mineralöle, synthetische Öle sowie pflanzliche und tierische Öle, sowie niedermolekulare hydrophile Lösungsmittel wie Alkohle, Ether, Ketone und ähnliches.

Einerseits sind daher aprotische bzw. apolare Lösungs- bzw. Verdünnungsmittel zu nennen, wie Mineralölfraktionen von mittlerem bis hohem Siedepunkt, z.B. Kerosin und Dieselöl, ferner Kohlenteeröle, Kohlenwasserstoffe, Paraffinöle, z.B. C₈- bis C₃₀-Kohlenwasserstoffe der n- oder iso-Alkan-Reihe oder Gemische davon, gegebenenfalls hydrierte oder teilhydrierte Aromaten oder Alkylaromaten aus der Benzol- oder Naphthalin-Reihe, z.B. aromatische oder cycloaliphatische C₇- bis C₁₈-Rohlenwasserstoffverbindungen, aliphatische oder aromatische Carbonsäure- oder Dicarbonsäureester, Fette oder Öle pflanzlichen oder tierischen Ursprungs, wie Mono-, Di- und Triglyceride, in Reinform oder als Gemisch beispielsweise in Form öliger Naturstoffextrakte, z.B. Olivenöl, Sojaöl, Sonnenblumenöl, Castoröl, Sesamöl, Maisöl, Erdnussöl, Rapsöl, Leinsamenöl, Mandelöl, Rhizinusöl, Safloröl, sowie deren Raffinate, z.B. hydrierte oder teilhydrierte Produkte davon und/oder deren Ester, insbesondere Methyl- und Ethylester.

Beispiele für C₈- bis C₃₀-Rohlenwasserstoffe der n- oder iso-Alkan-Reihe sind n- und iso-Octan, -Decan, -Hexadecan, -Octadecan, - Eicosan, und vorzugsweise Kohlenwasserstoffgemische, wie Paraffinöl (das in technischer Qualität bis zu etwa 5% Aromaten enthalten kann) und ein C₁₈-C₂₄-Gemisch, das unter der Bezeichnung Spraytex-Öl im Handel von der Fa. Texaco erhältlich ist.

Zu den aromatischen oder cycloaliphatischen C₇- bis C₁₈-Kohlenwasserstoffverbindungen gehören insbesondere aromatische oder cycloaliphatische Lösungsmittel aus der Alkyl-Aromatenreihe. Diese Verbindungen können unhydriert, teilhydriert oder vollständig hydriert sein. Zu derartigen Lösungsmitteln gehören insbesondere Mono-, Di- oder Trialkylbenzole, Mono-, Di-, Trialkyl-substituierte Tetraline und/oder Mono-, Di-, Tri- oder Tetraalkyl-substituierte Naphthaline (Alkyl steht vorzugsweise für C₁-C₆-Alkyl). Beispiele derartiger Lösungsmittel sind Toluol, o-, m-, p-Xylol, Ethylbenzol, Isopropylbenzol, tert.-Butylbenzol und Gemische, wie die unter der Bezeichnung Shellsol und Solvesso vertriebenen Produkte der Fa. Exxon, z.B. Solvesso 100, 150 und 200.

Beispiele für geeignete Monocarbonsäureester sind Ölsäureester, insbesondere Methyloleat und Ethyloleat, Laurinsäureester, insbesondere 2-Ethylhexyllaurat, Octyllaurat und Isopropyllaurat, Isopropylmyristat, Palmitinsäureester, insbesondere 2-Ethylhexylpalmitat und Isopropylpalmitat, Stearinsäureester, insbesondere Stearinsäure-n-butylester und 2-Ethylhexansäure-2-ethylhexylester.

Beispiele für geeignete Dicarbonsäureester sind Adipinsäureester, insbesondere Dimethyladipat, Di-n-butyladipat, Di-n-octyladipat, Di-iso-octyladipat, auch als Bis-(2-ethylhexyl)adipat bezeichnet, Di-n-nonyladidipat, Di-iso-nonyladidipat und Ditridecyladipat; Bernsteinsäureester, insbesondere Di-n-octylsuccinat und Di-isooctylsuccinat, und Di-(iso-nonyl)cyclohexan-1,2-dicarboxylat.

Der Anteil an den zuvor beschriebenen aprotischen Lösungs- bzw. Verdünnungsmitteln am Gesamtgewicht des Mittels beträgt in der Regel weniger als 30 Gew.-%, vorzugsweise weniger als 20 Gew.-% und insbesondere weniger als 5 Gew.-%.

Einige dieser aprotischen Lösungs- bzw Verdünnungsmittel haben adjuvante, d.h. insbesondere wirkungsfördernde Eigenschaften. Dies gilt insbesondere für besagte Mono- und Dicarbonsäuren. Unter diesem Aspekt können derartige Adjuvantien als Teil einer weiteren Formulierung (stand alone-Produkt) mit den erfindungsgemäßen Mitteln zu einem zweckmäßigen Zeitpunkt, in der Regel kurz vor der Applikation, vermischt werden.

Andererseits sind protische bzw. polare Lösungs- bzw. Verdünnungsmittel zu nennen, z.B. C₂-C₈-Monoalkohole wie Ethanol, Propanol, Isopropanol, Butanol, Isobutanol, tert-Butanol, Cyclohexanol und 2-Ethylhexanol, C₃-C₈-Ketone wie Diethylketon, t-Butylmethylketon und Cyclohexanon, sowie aprotische Amine, wie N-Methyl- und N-Octylpyrrolidon.

Der Anteil an den zuvor beschriebenen protischen bzw. polaren Lösungs- bzw. Verdünnungsmitteln am Gesamtgewicht des Mittels beträgt in der Regel weniger als 30 Gew.-%, vorzugsweise weniger als 20 Gew.-% und insbesondere weniger als 15 Gew.-%.

Auch Antiabsetzmittel können insbesondere für Suspensionskonzentrate verwendet werden. Diese dienen vor allem zur rheologischen Stabilisierung. Insbesondere sind in diesem Zusammenhang mineralische Produkte, z.B. Bentonite, Talcite und Herktorite, zu nennen.

Weitere gegebenenfalls brauchbare Zusätze sind z.B. unter Mineralsalzlösungen, welche zur Behebung von Ernährungs- und Spurenelementmängeln eingesetzt werden, nichtphytotoxischen Ölen und Ölkonzentraten, Antidriftreagenzien, Antischaummitteln, insbesondere solchen vom Silicon-Typ, beispielsweise das von der Firma Wacker vertriebene Silicon SL, und ähnlichem zu finden.

Gemäß einer besonderen Ausführungsform betrifft die vorliegende Erfindung Suspensionskonzentrate, umfassend
(a) 10 bis 70 Gew.-% wenigstens eines Wirkstoffs, der ausgewählt ist unter (a1) N,N,N-Trimethyl-N-β-chlorethyl-ammoniumchlorid der Formel (Ia) und (a2) N,N-Dimethylpiperidiniumchlorid der Formel (Ib);
(b) 10 bis 60 Gew.-% Wasser;
(c) 5 bis 50 Gew.-% wenigstens eines gegebenenfalls Endgruppen-verschlossenen Ethylenoxid/Propylenoxid-Blockcopolymers der Formel (IVa);
(d) 5 bis 40 Gew.-% Ammoniumnitrat;
(e1) 0,5 bis 30 Gew.-% Prohexadion-Calcium der Formel (IIa).

Diese Ausführungsform kann vorteilhafterweise einen oder mehrere der nachfolgend genannten Bestanteile optional enthalten:
(f1) 0,5 bis 30 Gew.-% wenigstens eines nichtionischen Tensids der Formel (V), insbesondere eines Sorbitolpolyethoxyfettsäureesters;
(g1) 0,1 bis 7,5 Gew.-% wenigstens eines Calcium-Salzes.

Die Herstellung erfindungsgemäßer Mittel kann in an sich bekannter Weise erfolgen. Dazu werden zumindest Teile der Komponenten zusammen gegeben. Hierbei ist zu beachten, daß Produkte, insbesondere handelsübliche Produkte, verwendet werden können, deren Bestandteile zu unterschiedlichen Komponenten beitragen können. Beispielsweise kann ein bestimmtes Tensid in einem aprotischen Lösungmittel gelöst sein, so daß dieses Produkt zu verschiedenen Komponenten beitragen kann. Ferner können geringe Anteile an unerwünschten Substanzen mit handelsüblichen Produkten eingebracht werden. Beispielsweise erfolgt die Auswahl der zu erfindungsgemäßen Mitteln zu verarbeitenden Produkte vorteilhafterweise unter dem Aspekt eines möglichst geringen Gehaltes an Anionen, die mit den in den Mitteln vorhandenen Kationen, z.B. den Ammonium- und insbesodnere den Calcium-Ionen, schwerlösliche Salze bilden können. Als Gemisch sind die zusammengegebenen Produkte dann in der Regel intensiv miteinander zu einem homogenen Gemisch zu vermengen und erforderlichenfalls - z.B. im Falle von Suspensionen, zu vermahlen.

Das Vermengen kann in an sich bekannter Weise erfolgen, z.B. durch Homogenisieren mit geeigneten Vorrichtungen wie KPG- oder Magnetrührern.

Auch das Vermahlen ist ein an sich bekannter Vorgang. Als Mahlkörper kann man Glasmahlkörper oder andere mineralische oder metallische Mahlkörper, in der Regel in einer Größe von 0,1-30 mm und insbesondere von 0,6-2 mm verwenden. Man zerkleinert das Gemisch in der Regel solange, bis die gewünschte Partikelgröße erreicht ist.

Allgemein kann die Vermahlung in Kreisfahrweise, d.h. laufendes Umpumpen des SCs im Kreis, oder mittels Passagenfahrweise, d.h. komplettes und wiederholtes Durchpumpen beziehungsweise Durchfahren eines SC-Ansatzes, durchgeführt werden.

Die Vermahlung kann mit herkömmlichen Kugel-, Perl- oder Rührwerksmühlen erfolgen, z.B. in einer Dynomühle (Fa. Bachofen), mit Ansatzgrößen von beispielsweise 0,5 bin zu 1 Liter in sogenannter Passagenfahrweise. Nach mehreren - insbesondere 4 bis 6 - Passagen (Durchpumpen der Aufschlämmung durch die Mühle mit Hilfe einer Schlauchpumpe) werden dabei nach mikroskopischer Auswertung mittlere Partikelgrößen von 0,5 bis 10 µm erreicht.

Gemäß einer besonderen Ausführungsform betrifft die vorliegende Erfindung ein Verfahren zur Herstellung eines Mittels durch Zusammenfügen der Komponenten, das dadurch gekennzeichnet ist, daß man ein Gemisch aus Ammoniumnitrat- und Calciumcarbonat verwendet. Diese Vorgehensweise hat nicht nur den Vorteil, daß man herkömmliches und/oder handelsübliches Düngergranulat verwenden kann, sondern daß auch gleichzeitig ein Beitrag zur Komponente (g1) geleistet wird. Vorteilhafterweise vewendet man Ammoniumnitrat und Calciumcarbonat-haltige Gemische, insbesondere Düngergranulat, mit einem Anteil an Calciumcarbonat am Gesamtgewicht des Gemiches von 0,5 bis 7,5 Gew.-%, vorzugsweise von 1 bis 5 Gew.-% und insbesondere von 2 bis 4 Gew.-%. Vorzugsweise wird dann im Zuge des Verfahrens zumindest ein Teil des Calciumcarbonats mit Säure umsetzt. Es ergibt sich das entsprechende Calciumsalz, das zu Komponente (g1) beiträgt. Zweckmäßigerweise verwendet man einen leichten Unterschuß bzw. eine auf Calciumcarbonat bezogene equimolale Menge an Säure, z.B. etwa 0,8 bis 1 Molequivalent.

Gegenstand der vorliegenden Erfindung ist auch die Verwendung erfindungsgemäßer Mittel als Bioregulator bei einer Reihe verschiedenartiger Anwendungsmöglichkeiten, beispielsweise im Pflanzenanbau, in der Landwirtschaft und im Gartenbau.

Bioregulatorische Wirkstoffe können z.B. das Pflanzenwachstumbeeinflussen (Wachstumsregulatoren). Es können praktisch alle Entwicklungsstadien einer Pflanze erfaßt werden.

So läßt sich beispielsweise das vegetative Wachstum der Pflanzen stark hemmen, was sich insbesondere in einer Reduzierung des Längenwachstums äußert. Die behandelten Pflanzen weisen demgemäß einen gedrungenen Wuchs auf; außerdem ist eine dunklere Blattfärbung zu beobachten. Als vorteilhaft für die Praxis erweist sich eine verminderte Intensität des Wachstums von Gräsern an Straßenrändern, Hecken, Kanalböschungen und auf Rasenflächen wie Park-, Sport- und Obstanlagen, Zierrasen und Flugplätzen, so daß der arbeits- und kostenaufwendige Rasenschnitt reduziert werden kann.

Von wirtschaftlichem Interesse ist auch die Erhöhung der Standfestigkeit von lageranfälligen Kulturen wie Getreide, Mais und Sonnenblumen. Die dabei verursachte Halmverkürzung und Halmverstärkung verringern oder beseitigen die Gefahr des "Lagerns" (des Umknickens) von Pflanzen unter ungünstigen witterungsbedingungen vor der Ernte. Wichtig ist auch die Anwendung von Wachstumsregulatoren zur Hemmung des Längenwachstums und zur zeitlichen Veränderung des Reifeverlaufs bei Baumwolle. Damit wird ein vollständig mechanisiertes Beernten dieser Kulturpflanze ermöglicht. Bei Obst- und anderen Bäumen lassen sich mit den Wachstumsregulatoren Schnittkosten einsparen. Außerdem kann die Alternanz von Obstbäumen durch Wachstumsregulatoren gebrochen werden. Durch Anwendung von Wachstumsregulatoren kann auch die seitliche Verzweigung der Pflanzen vermehrt oder gehemmt werden. Daran besteht Interesse, wenn z. B. bei Tabakpflanzen die Ausbildung von Seitentrieben (Geiztrieben) zugunsten des Blattwachstums gehemmt werden soll.

Mit Wachstumsregulatoren läßt sich beispielsweise bei Winterraps auch die Frostresistenz erheblich erhöhen. Dabei werden einerseits das Längenwachstum und die Entwicklung einer zu üppigen (und dadurch besonders frostanfälligen) Blatt- bzw. Pflanzenmasse gehemmt. Andererseits werden die jungen Rapspflanzen nach der Aussaat und vor dem Einsetzen der Winterfröste trotz günstiger Wachstumsbedingungen in der vegetativen Entwicklung zurückgehalten. Dadurch wird auch die Frostgefährdung solcher Pflanzen beseitigt, die zum vorzeitigen Abbau der Blühhemmung und zum Übergang in die generative Phase neigen. Auch bei anderen Kulturen, z. B. Wintergetreide ist es vorteilhaft, wenn die Bestände durch Behandlung mit Wachstumsregulatoren im Herbst zwar gut bestockt werden, aber nicht zu üppig in den Winter hineingehen. Dadurch kann der erhöhten Frostempfindlichkeit und - wegen der relativ geringen Blatt- bzw. Pflanzenmasse - dem Befall mit verschiedenen Krankheiten (z. B. Pilzkrankheiten) vorgebeugt werden. Die Hemmung des vegetativen Wachstums ermöglicht außerdem bei vielen Kulturpflanzen eine dichtere Bepflanzung des Bodens, so daß ein Mehrertrag bezogen auf die Bodenfläche erzielt werden kann.

Mit Hilfe von Wachstumsregulatoren lassen sich Mehrerträge sowohl an Pflanzenteilen als auch an Pflanzeninhaltsstoffen erzielen. So ist es beispielsweise auch möglich, das Wachstum größerer Mengen an Knospen, Blüten, Blättern, Früchten, Samenkörnern, Wurzeln und Knollen zu induzieren, den Gehalt an Zucker in Zuckerrüben, Zukkerrohr sowie Zitrusfrüchten zu erhöhen, den Proteingehalt in Getreide oder Soja zu steigern oder Gummibäume zum vermehrten Latexfluß zu stimulieren. Dabei können die Wirkstoffe Ertragssteigerungen durch Eingriffe in den pflanzlichen Stoffwechsel bzw. durch Förderung oder Hemmung des vegetativen und/oder des generativen Wachstums verursachen. Mit Pflanzenwachstumsregulatoren lassen sich schließlich sowohl eine Verkürzung bzw. Verlängerung der Entwicklungsstadien als auch eine Beschleunigung bzw. Verzögerung der Reife der geernteten Pflanzenteile vor oder nach der Ernte erreichen.

Von wirtschaftlichem Interesse ist beispielsweise die Ernteerleichterung, die durch das zeitlich konzentrierte Abfallen oder Vermindern der Haftfestigkeit am Baum bei Zitrusfrüchten, Oliven oder bei anderen Arten und Sorten von Kern-, Stein- und Schalenobst ermöglicht wird. Derselbe Mechanismus, das heißt die Förderung der Ausbildung von Trenngewebe zwischen Frucht- bzw. Blattund Sproßteil der Pflanze ist auch für ein gut kontrolliertes Entblättern von Nutzpflanzen wie beispielsweise Baumwolle wesentlich.

Mit wachstumsregulatoren kann weiterhin der Wasserverbrauch von Pflanzen reduziert werden. Dies ist besonders wichtig für landwirtschaftliche Nutzflächen, die unter einem hohen Kostenaufwand künstlich bewässert werden müssen, z.B. in ariden oder semiariden Gebieten. Durch den Einsatz von Wachstumsregulatoren läßt sich die Intensität der Bewässerung reduzieren und damit eine kostengünstigere Bewirtschaftung durchführen. Unter dem Einfluß von Wachstumsregulatoren kommt es zu einer besseren Ausnutzung des vorhandenen Wassers, weil u. a. die Öffnungsweite der Stomata reduziert wird, eine dickere Epidermis und Cuticula ausgebildet werden, die Durchwurzelung des Bodens verbessert wird, die transpirierende Blattoberfläche reduziert wird, oder das Mikroklima im Kulturpflanzenbestand durch einen kompakteren Wuchs günstig beeinflußt wird.

Erfindungsgemäße Mittel werden insbesondere als Bioregulator im Getreideanbau und vor allem für Weizen, Gerste, Hafer und Roggen sowie Mais und Reis verwendet.

Dazu werden die erfindungsgemäßen Mittel vor Gebrauch in der Regel durch Verdünnen in üblicher Weise in eine zur Anwendung brauchbare Form überführt. Bevorzugt ist das Verdünnen mit Wasser oder auch aprotischen Lösungsmitteln, beispielsweise im Tankmixverfahren. Die Verwendung in Form einer Spritzbrühen-Zubereitung ist bevorzugt. Appliziert wird in der Regel im Vorauflauf- oder Nachauflaufverfahren.

Für eine übliche Tankmix-Spritzbrühe werden pro ha 0,2 bis 5,0, vorzugsweise 0,3 bis 3,0 und insbesondere 0,35 bis 2,0 1 des erfindungsgemäßen Mittels mit Wasser auf 50 bis 2000 1 und insbesondere 100 bis 1000 1 verdünnt. Der Tankmix-Spritzbrühe werden gegebenenfalls 0,1 Gew.-% bis 5 Gew.-% (bezogen auf Spritzbrühe) an weiteren anionischen, kationischen oder nicht-ionischen Tensiden, Hilfsmitteln, Polymeren und/oder den vorstehend genannten anderen herbiziden Wirkstoffen zugesetzt. Beispielhafte Stoffe für derartige Tenside und weitere Hilfsmittel sind vorstehend bereits beschrieben. Insbesondere sind Stärke und Stärkederivate, z.B. eine Carboxyl- und Sulfonsäuregruppen enthaltende Stärke (Nu-Film der Union Carbide Corp.) sowie Spreitmittel und Extender, wie Vapor Guard der Miller Chemical & Fertilizer Corp., zu nennen.

Im Rahmen der vorliegenden Beschreibung umfassen Begriffe wie Alkyl, Alkoxy, etc. geradkettige oder verzweigte Kohlenwasserstoffgruppen, wie Methyl, Ethyl, n-Propyl, i-Propyl, n-Butyl, i-Butyl, sek-Butyl, t-Butyl, n-Pentyl, n-Hexyl, n-Octyl, 2-Ethylhexyl, n-Nonyl, iso-Nonyl, n-Decyl, iso-Decyl, n-Undecyl, iso-Undecyl, n-Dodecyl, iso-Dodecyl, n-Tridecyl, iso-Tridecyl, Stearyl, n-Eicosyl, vorzugsweise mit - soweit nichts anderes angegeben ist - 1 bis 8, insbesondere 1 bis 6 und besonders bevorzugt 1 bis 4 Kohlenstoffatomen für kurzkettige Reste und 6 bis 30, insbesondere 8 bis 24 und besonders bevorzugt 12 bis 24 Kohlenstoffatomen für langkettige Reste.

Der Begriff "Cycloalkyl" umfasst mono- oder bicyclische, gegebenenfalls ein-, zwei oder dreifach mit C₁-C₄-Alkyl substituierte, gesättigte Kohlenwasserstoffgruppen, wie Cyclopropyl, Cyclobutyl, Cyclopentyl und vor allem Cyclohexyl, etc., vorzugsweise mit - soweit nichts anderes angegeben ist - 3 bis 10, insbesondere 3 bis 6 und besonders bevorzugt 6 Kohlenstoffatomen. Diese Ausführungen gelten analog für "Cycloalkylen" als entsprechende zweibindige Reste, von denen die Cycloalk-1,2-ylene bevorzugt sind.

Der Begriff "Alkenyl" umfasst geradkettige oder verzweigte ungesättigte Kohlenwasserstoffgruppen, die vorzugsweise eine, zwei oder drei Doppelbindungen aufweisen, wie Ethenyl, Prop-2-en-1-yl, Oleyl etc., vorzugsweise mit - soweit nichts anderes angegeben ist - 3 bis 8, insbesondere 2 bis 6 und besonders bevorzugt 2 bis 4 Kohlenstoffatomen für kurzkettige Reste und 6 bis 30, insbesondere 8 bis 24 und besonders bevorzugt 12 bis 24 Kohlenstoffatomen für langkettige Reste.

Der Begriff "Alkylen" umfasst geradkettige oder verzweigte zweibindige Reste, wie Methylen, Eth-1,1-ylen, Eth-1,2-ylen, Prop-1,1-ylen, Prop-1,2-ylen, Prop-1,3-ylen, Prop-2,2-ylen, But-1,1-ylen, But-1,2-ylen, But-1,3-ylen, But-1,4-ylen, But-2,2-ylen, 2-Methylprop-1,3-ylen, Pent-1,1-ylen, Pent-1,2-ylen, Pent-1,3-ylen, Pent-1,4-ylen, Pent-1,5-ylen, Pent-2,2-ylen, Pent-2,3-ylen, Pent-2,4-ylen, Pent-3,3-ylen, 1-Methylbut-1,4-ylen, 2-Methylbut-1,4-ylen, etc., vorzugsweise mit - soweit nichts anderes angegeben ist - 2 bis 18, insbesondere 2 bis 10 und besonders bevorzugt 2 bis 6 Kohlenstoffatomen.

Der Begriff "Halogen" steht vorzugsweise für Fluor, Chlor, Brom und Iod, insbesondere für Fluor und vor allem für Chlor.

Die Erfindung wird durch die nachfolgenden Beispiele näher erläutert:

### Herstellungsbeispiele

### Referenzbeispiel 1: SL-Formulierungen

Die in den Beispielen beschriebenen SL-Formulierungen werden hergestellt, indem man die verschiedenen Komponenten per Magnetrührer miteinander verrührt. Der Wirkstoff Chlormequat-Chlorid, im folgenden mit CCC für Chlorcholinchlorid abgekürzt, wurde als wässriges Wirkstoff-Konzentrat mit 750 g/l CCC eingesetzt. Mepiquat-Chlorid, im folgenden mit MQC abgekürzt, wird als wässriges wirkstoff-Konzentrat mit 610 g/l MQC eingesetzt.

### Referenzbeispiel 2: SC-Formulierungen

Zur Herstellung der in den Beispielen beschriebenen SC-Formulierungen werden die Wirkstoff-Konzentrate mit entsprechenden Mengen an Ammoniumnitrat und 50 g Wasser versetzt. Das Ammoniumnitrat wird unter Rühren gelöst. Anschließend werden die weiteren jeweils angegebenen Komponenten zugesetzt, Prohexadion-Calcium bis zu einem Wirkstoff-Gehalt von 50 g/l eingerührt und die Mischung mit Wasser auf 1 1 aufgefüllt (ca. 50 ml).

Sodann wird das Gemisch in einer 0,5 1-Labor-Dynomühle unter Verwendung von 1 mm Glasperlen bei einer Vorkühlung von 15°C mit einem Produktaustritt von maximal 25°C (Schlauchpumpe mit 5 l/h) 5 Mahl-Passagen unterzogen, bis ca. 80% der Partikel eine Größe von weniger als 2 µm aufwiesen. Zuletzt wird das Antischaummittel Silikon SRE zu 1,0 g/l eingerührt.

### Beispiele 1 bis 45: SL-Formulierungen

Unter Anwendung des Herstellungsverfahrens gemäß Referenzbeispiel 1 werden SL-Formulierungen den Angaben der nachfolgenden Tabellen 1 und 2 entsprechend hergestellt (Beispiele 1 bis 45).

**Tabelle 1:**

| Wirk- und Hilfsstoffe bestimmter SL-Formulierungen, angegeben als ["Bezeichnung"/"Teile"], sofern nicht anderes vermerkt | | | | |
|---|---|---|---|---|
| Bsp. | Komponente | | | |
| | (a) | (b) | (c) | (d) bzw. NH₄⁺X |
| 1 | CCC/3,5 | PE 6400/1,5 | 1,82 (26,7 %) | - |
| 2 | CCC/3,5 | PE 6400/1,5 | 2,32 (31,7 %) | - |
| 3 | CCC/3,5 | PE 6400/1,5 | 2,82 (36,1 %) | - |
| 4 | CCC/3,5 | PE 6400/1,5 | 3,32 (39,1 %) | - |
| 5 | CCC/3,5 | PE 6400/1,5 | 3,82 (43,3 %) | - |
| 6 | CCC/3,5 | PE 6400/1,5 | 4,22 (45,8 %) | - |
| 7 | CCC/3,5 | PE 6400/1,5 | 4,72 (48,6 %) | - |
| 8 | CCC/3,5 | PE 6400/1,5 | 1,82 (20,6 %) | NH₄NO₃/2,0 |
| 9 | CCC/3,5 | PE 6400/1,5 | 2,32 (24,9 %) | NH₄NO₃/2,0 |
| 10 | CCC/3,5 | PE 6400/1,5 | 2,82 (28,7 %) | NH₄NO₃/2,0 |
| 11 | CCC/3,5 | PE 6400/1,5 | 3,32 (32,2 %) | NH₄NO₃/2,0 |
| 12 | CCC/3,5 | PE 6400/1,5 | 3,82 (35,3 %) | NH₄NO₃/2,0 |
| 13 | CCC/3,5 | PE 6400/1,5 | 4,22 (37,6 %) | NH₄NO₃/2,0 |
| 14 | CCC/3,5 | PE 6400/1,5 | 4,72 (40,3 %) | NH₄NO₃/2,0 |
| 15 | CCC/2 | PE 6400/1,5 | 4,2 | NH₄NO₃/2,0 |
| 16 | CCC/2 | PE 6400/1,5 | 4,2 | NH₄HCOO/2,0 |
| 17 | CCC/2 | PE 6400/1,5 | 4,2 | NH₄Cl/2,0 |
| 18 | CCC/2 | PE 6400/1,5 | 4,2 | (NH₄)₂SO₄/2,0 |
| 19 | CCC/2 | PE 6400/1,5 | 4,2 | (NH₄)₃PO₄/2,0 |
| 20 | CCC/2 | PE 6400/1,5 | 4,2 | (NH₄)₃Citrat/2,0 |
| 21 | CCC/2 | PE 6400/1,5 | 4,2 | NH₄CH₃COO/2,0 |
| 22 | CCC/2 | PE 6800/1,5 | 4,2 | NH₄NO₃/2,0 |
| 23 | CCC/2 | PE 6800/1,5 | 4,2 | NH₄HCOO/2,0 |
| 24 | CCC/2 | PE 6800/1,5 | 4,2 | NH₄Cl/2,0 |
| 25 | CCC/2 | PE 6800/1,5 | 4,2 | (NH₄)₂SO₄/2,0 |
| 26 | CCC/2 | PE 6800/1,5 | 4,2 | (NH₄)₃PO₄/2,0 |
| 27 | CCC/2 | PE 6800/1,5 | 4,2 | (NH₄)₃Citrat/2,0 |
| 28 | CCC/2 | PE 6800/1,5 | 4,2 | NH₄CH₃COO/2,0 |
| 29 | CCC/2 | PE 10500/1,5 | 4,2 | NH₄NO₃/2,0 |
| 30 | CCC/2 | PE 10500/1,5 | 4,2 | (NH₄)₃PO₄/2,0 |
| 31 | CCC/2 | PE 10500/1,5 | 4,2 | (NH₄)₃Citrat/2,0 |

Die Beispiele 1 bis 7 zeigen, dass erst ab einem relativ hohen Wasseranteil von 45% und mehr die bei geringeren Wasseranteilen 2-phasigen Gemische in 1-phasige Gemische übergehen. Allerdings sind auch diese 1-phasigen Gemische trüb und gehen bei längerer Lagerung wieder in 2-phasige Systeme über.

Setzt man Ammoniumnitrat zu, so zeigen die entsprechenden Beispiele 8 bis 14, dass bereits bei wesentlich geringeren Wasseranteilen 1-phasige homogene Systeme erhalten werden. Während gemäß den Beispielen 8 und 9 noch die Ausfällung von Ammoniumchlorid beobachtet wird und die Systeme hochviskos bzw. pastös sind, werden in den Beispielen 10 bis 14 mit zunehmendem Wassergehalt viskose bzw. niedrigviskose Systeme erhalten. Beispielsweise betragen die Viskositäten gemäß den Beispielen 10 bis 12 etwa 680, 168 bzw. 45 mPas.

Hingegen zeigen die Beispiele 16 bis 21, 23 bis 28, 30 und 31, dass mit anderen Ammoniumsalzen als Ammoniumnitrat 2-phasige Systeme erhalten werden, während unter ansonsten gleichen Bedingungen der Zusatz von Ammoniumnitrat gemäß den Beispielen 15, 22 und 29 zu 1-phasigen und insbesondere fließfähigen Systemen führt.

Ohne den Zusatz von Ammoniumnitrat lassen sich 1-phasige Systeme auch dann nicht erzielen, wenn man weitere oberflächenaktive Verbindungen, beispielsweise die in den nachfolgenden Beispielen 32 bis 38 verwendeten (Glycerin)fettsäureethoxylate, Alkylglykoside bzw. polyethoxylierten Sorbitolpolyfettsäureester, gemeinsam mit den erfindungsgemäßen EO/PO-Blockcopolymeren einsetzt. Durch Zusatz von Ammoniumnitrat können aber genau diese Gemische in 1-phasige Systeme überführt werden (vgl. Beispiele 39 bis 45).

**Tabelle 2:**

| Wirk- und Hilfsstoffe bestimmter SL-Formulierungen, angegeben als ["Bezeichnung"/"Teile"], sofern nicht anderes vermerkt | | | | | |
|---|---|---|---|---|---|
| Bsp. | Komponente | | | | |
| | (a) | (b) | (c) | (d) | (f) |
| 32 | MQC/5,12 | PE 6400/1,0 | 1,1 | - | WO-CE/0,5 |
| | | | | | AG 6202/0,5 |
| | | | | | G 1086/0,5 |
| 33 | MQC/5,12 | PE 6400/1,0 | 1,0 | - | WO-CE/0,5 |
| | | | | | AG 6202/0,5 |
| | | | | | G 1086/0,5 |
| 34 | MQC/5,12 | PE 6400/1,5 | 1,35 | - | G 1086/0,75 |
| 35 | MQC/5,12 | PE 6400/1,5 | 1,25 | - | G 1086/0,75 |
| 36 | MQC/5,12 | PE 6400/1,5 | 1,25 | - | G 1049/0,75 |
| 37 | MQC/5,12 | PE 6400/1,5 | 0,76 - | | ELP/0,75 |
| | | | | | AG 6202/0,5 |
| 38 | MQC/5,12 | PE 6400/1,5 | 1,25 - | | HE/0,75 |
| 39 | MQC/5,12 | PE 6400/1,0 | 1,1 | NH₄NO₃/2,0 | WO-CE/0,5 |
| | | | | | AG 6202/0,5 |
| | | | | | G 1086/0,5 |
| 40 | MQC/5,12 | PE 6400/1,0 | 1,0 | NH₄NO₃/2,0 | WO-CE/0,5 |
| | | | | | AG 6202/0,5 |
| | | | | | G 1086/0,5 |
| 41 | MQC/5,12 | PE 6400/1,5 | 1,35 | NH₄NO₃/2,0 | G 1086/0,75 |
| 42 | MQC/5,12 | PE 6400/1,5 | 1,25 | NE₄NO₃/2,0 | G 1086/0,75 |
| 43 | MQC/5,12 | PE 6400/1,5 | 1,25 | NH₄NO₃/2,0 | G 1049/0,75 |
| 44 | MQC/5,12 | PE 6400/1,5 | 0,76 | NH₄NO₃/2,0 | ELP/0,75 |
| | | | | | AG 6202/0,5 |
| 45 | MQC/5,12 | PE 6400/1,5 | 1,25 | NH₄NO₃/2,0 | HE/0,75 |

### Beispiele 46 bis 52: SC-Formulierungen

Unter Anwendung des Herstellungsverfahrens gemäß Referenzbeispiel 2 werden SC-Formulierungen den Angaben der nachfolgenden Tabelle 3 entsprechend hergestellt (Beispiele 46 bis 52).

**Tabelle 3:**

| Wirk- und Hilfsstoffe bestimmter SC-Formulierungen, angegeben als ["Bezeichnung" ("g/l")], sofern nicht anderes vermerkt | | | | | | | |
|---|---|---|---|---|---|---|---|
| Bsp. | Komponente | | | | | | |
| | (a) | (b) | (c) | (d) | (e) | (f) | (g) |
| 46 | MQC (300) | PE 6400 (100) | ad 11 | NH₄NO₃ (200) | PC (50) | WO-CE (50) | - |
| | | | | | | AG 6202 (50) | |
| | | | | | | G 1086 (50) | |
| 47 | MQC (300) | PE 6400 (100) | ad 11 | NH₄NO₃ (200) | PC (50) | WO-CE (50) | CaCl₂ |
| | | | | | | AG 6202 (50) | (10) |
| | | | | | | G 1086 (50) | |
| 48 | MQC (300) | PE 6400 (150) | ad 11 | NH₄NO₃ (200) | PC (50) | G 1086 (75) | |
| 49 | MQC (300) | PE 6400 (150) | ad 11 | NH₄NO₃ (200) | PC (50) | G 1086 (75) | CaCl₂ (10) |
| 50 | MQC (300) | PE 6400 (150) | ad 11 | NH₄NO₃ (200) | PC (50) | G 1049 (75) | CaCl₂ (10) |
| 51 | MQC (300) | PE 6400 (150) | ad 11 | NH₄NO₃ (200) | PC (50) | ELP (75) | CaCl₂ (10) |
| | | | | | | AG 6202 (50) | |
| 52 | MQC (300) | PE 6400 (150) | ad 11 | NH₄NO₃ (200) | PC (50) | HE (75) | CaCl₂ (10) |

### Physikalische Eigenschaften: Stabilität

Die Bewertung der Stabilität von Suspensionskonzentraten (Beispiele 46 bis 52) wird in einem Schnellagerungstest untersucht. Hierzu werden die Proben in geschlossenen Glasbehältnissen 14 Tage bei 54°C gelagert. Anschließend wird die Wirkstoffkonzentration bestimmt. Dieser Wert in Relation zum ursprünglichen Wirkstoffgehalt ist ein Maß für die Stabilität des Suspensionskonzentrats.

**Tabelle 5:**

| Stabilität von SC-Formulierungen | | |
|---|---|---|
| Bsp. | Wirkstoffrestgehalt in % bezogen auf Ausgangsmenge | |
| | MQC | PC |
| 46 | 99,2 | 96,7 |
| 47 | 100 | 97,5 |
| 48 | 100 | 96,9 |
| 49 | 98,4 | 98,2 |
| 50 | 99,4 | 100 |
| 51 | 98,9 | 97,2 |
| 52 | 100 | 96,5 |

Die in den Beispielen 46 bis 52 beschriebenen auf einer homogenen Phase basierenden SC-Formulierungen waren physikalisch und emulgiertechnisch vor und nach 14-tägiger Lagerung bei 54°C einwandfrei und homogen. Die in Bezug auf die Zersetzung beider Wirkstoffe beurteilte Lagerstabilität war in allen Fällen mit einem Restwirkstoffgehalt von wenigstens 95% zufriedenstellend. Die Zugabe von Calciumchlorid führte zu einer zusätzlichen Stabilisierung von Prohexadion-Calcium.

Die in obigen Beispielen verwendeten Wirk- und Hilfsstoffe sind in nachfolgender Tabelle 4 erläutert.

**Tabelle 4:**

| Name **(Abkürzung)** | Strukturtyp/Einsatzstoff | Hersteller |
|---|---|---|
| Komponente (a) | | |
| **CCC** | Chlorcholinchlorid, Chlormequat-Chlorid | BASF AG |
| **MQC** | Mepiquatchlorid | BASF AG |
| **PC** | Prohexadion-Calcium | BASF AG/Kumiai |

| Komponente (b) | | |
|---|---|---|
| Pluronic **PE 6400** | EO/PO-Blockcopolymer; 40 Gew.-% EO; 2900 | BASF |
| Pluronic **PE 6800** | EO/PO-Blockcopolymer; 80 Gew.-% EO; 8000 | BASF |
| Pluronic **PE 10500** | EO/PO-Blockcopolymer; 50 Gew.-% EO; 6500 | BASF |

| Komponente (f) | | |
|---|---|---|
| Cremophor **WO-CE** 5115 | Oleylglycerinetherethoxylat; CAS-Nr. 104376-61-6 | BASF |
| Emulan **ELP** | Rizinusöl x 11 EO | BASF |
| **AG 6202** | 2-Ethylhexylglukosid | Witco |
| Atlas **G 1086** | Polyoxyethylensorbitol-hexaoleat | Uniqema |
| Atlas **G 1049** | Polyoxyethylensorbitol-heptaisostearat | Uniqema |
| Glycerox **HE** | Kokosfettsäureester mit ethoxyliertem Glycerin; CAS-Nr. 68553-03-7 | Croda |

## Patentansprüche

1. Mittel auf Basis einer homogenen Phase, umfassend
(a) wenigstens einen Wirkstoff der Formel (I) 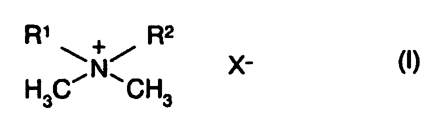 wobei R¹, R² und X die folgenden Bedeutungen haben:
R¹ C₁-C₄-Alkyl;
R² C₁-C₄-Alkyl, Cyclopentenyl, Halogen-C₁-C₆-Alkyl; oder R¹ und R² zusammen einen Rest -(CH₂)₅-, -(CH₂)₂-O-(CH₂)₂- oder -(CH₂)-CH=CH-(CH₂)-NH- darstellen;
X eine anionische Gruppe;
(b) Wasser;
(c) wenigstens ein gegebenenfalls Endgruppen-verschlossenes Ethylenoxid/Propylenoxid-Blockcopolymer;
(d) Ammoniumnitrat.

2. Mittel nach Anspruch 1, **dadurch gekennzeichnet, daß** die homogene Phase eine Dichte von wenigstens 1,04 g/l, vorzugsweise von wenigstens 1,07 g/l aufweist.

3. Mittel nach einem der vorhergehenden Ansprüche, **dadurch gekennzeichnet, daß** der Wirkstoff der Formel I ausgewählt ist unter
(a1) N,N,N-Trimethyl-N-β-chlorethyl-ammoniumchlorid der Formel (Ia), 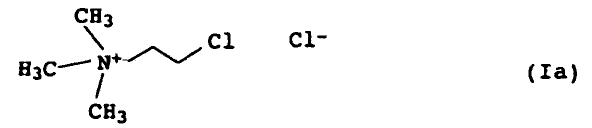
(a2) N,N-Dimethylpiperidiniumchlorid der Formel (Ib) 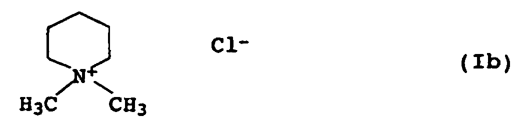 und
(a3) N,N-Dimethylmorpholiniumchlorid der Formel (Ic)

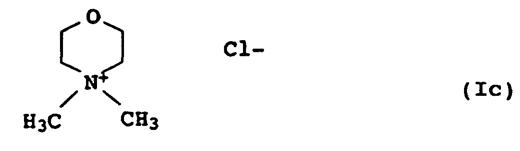

4. Mittel nach einem der vorhergehenden Ansprüche, **dadurch gekennzeichnet, daß** das gegebenenfalls Endgruppen-verschlossene Ethylenoxid/Propylenoxid-Blockcopolymer ausgewählt ist unter Polymeren der Formel (IVa)
R¹⁶O-(C₂H₄O)ₚ-(C₃H₆O)_{q}-(C₂H₄O)ᵣ-R¹⁷ (IVa)
oder Polymeren der Formel (IVb)
R¹⁶O-(C₃H₆O)ₚ-(C₂H₄O)_{q}-(C₃H₆O)ᵣ-R¹⁷ (IVb)
wobei
p, q, r unabhängig voneinander einem Wert im Bereich von 3 bis 250, bevorzugt 5 bis 200 und insbesondere 10 bis 150 entsprechen und R¹⁶, R¹⁷ unabhängig voneinander für Wasserstoff, C₁-C₄-Alkyl und C₁-C₄-Alkyl-CO stehen.

5. Mittel nach einem der vorhergehenden Ansprüche, umfassend
(e) wenigstens einen weiteren Bioregulator.

6. Mittel nach Anspruch 5, umfassend
(e1) wenigstens einen Wirkstoff der Formel (II) 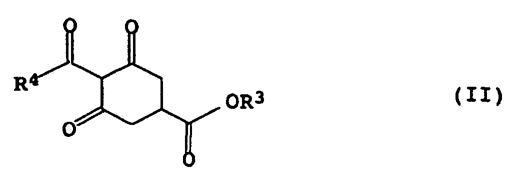 wobei R³ und R⁴ die folgenden Bedeutungen haben:
R³ Wasserstoff, C₁-C₄-Alkyl, C₁-C₄-Alkyl-S-C₁-C₄-Alkyl, Phenyl, substituiertes Phenyl;
R⁴ C₁-C₄-Alkyl, C₃-C₆-Cycloalkyl, Benzyl, substituiertes Benzyl, Phenethyl, Phenoxymethyl, 2-Thienylmethyl, C₁-C₄-Alkoxymethyl, C₁-C₄-Alkylthiomethyl;
oder ein landwirtschaftlich nutzbares Salz davon.

7. Mittel nach Anspruch 6, **dadurch gekennzeichnet, daß** die Reste R⁴ für Ethyl und R³ für Wasserstoff, C₁-C₄-Alkyl oder ein landwirtschaftlich nutzbares Kation stehen.

8. Mittel nach Anspruch 7, **dadurch gekennzeichnet, daß** der Wirkstoff der Formel II Prohexadion-Calcium der Formel (IIa) ist

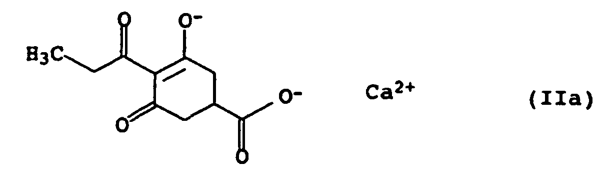

9. Mittel nach einem der Ansprüche 5 bis 8, umfassend
(e2) wenigstens einen Wirkstoff der Formel (IIIa) 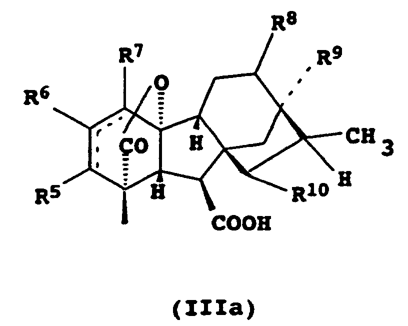 worin die Reste R⁵, R⁶, R⁷, R⁸, R⁹ und R¹⁰ unabhängig voneinander für Wasserstoff oder Hydroxyl stehen und die unterbrochene Linie eine optionale Doppelbindung entweder zwischen den Kohlenstoffatomen in Position 1 und 2 oder zwischen den Kohlenstoffatomen in Position 2 und 3 darstellt;
und/oder wenigstens einen Wirkstoff der Formel (IIIb) 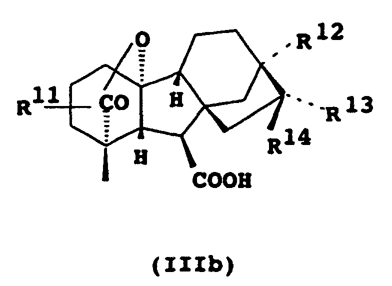 worin R¹¹ angibt, dass der A-Ring (i) keine weitere Funktionalität aufweist, oder (ii) eine 1,2-Doppelbindung oder eine 2,3-Doppelbindung aufweist oder (iii) ein 3a oder 3β-OH, F, Cl oder Br aufweist, wobei eine 1,2-Doppelbindung vorhanden sein kann oder nicht, oder (iv) ein 1α- oder 1β-OH, F, Cl oder Br aufweist, wobei eine 2,3-Doppelbindung vorhanden sein kann oder nicht;
R¹² für H oder OH, OC(=O)R¹⁵ oder OR¹⁵ steht;
R¹³, R¹⁴ unabhängig voneinander für H, F, Cl, Br, C₁-C₆-Alkyl, C₂-C₆-Alkenyl, C₃-C₆-Cykloalkyl oder CH₂X stehen, wobei X für F, Cl oder Br steht;
R¹⁵ für C₁-C₆-Alkyl steht.

10. Mittel nach Anspruch 9, **dadurch gekennzeichnet, daß** der Wirkstoff der Formel (IIIb) exo-16,17-Dihydro-GA5-13-acetat der Formel (IIIc) ist

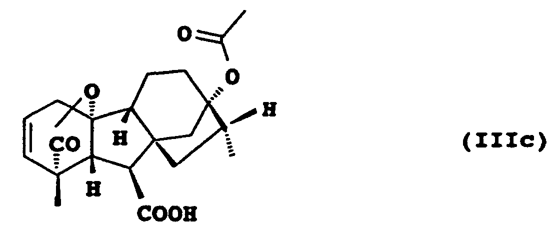

11. Mittel nach einem der vorhergehenden Ansprüche, umfassend
(f) wenigstens ein weiteres Tensid.

12. Mittel nach Anspruch 11, **dadurch gekennzeichnet, daß** das Tensid ausgewählt ist unter
(f1) nichtionischen Tensiden der Formel (V),
[R¹⁸-CO-(EO)ₓ-]_{y}A¹ (V)
wobei R¹⁸ für einen geradkettigen oder verzweigten, gesättigten oder ungesättigten, gegebenenfalls monooder dihydroxylierten aliphatischen Rest mit 8 bis 30 Kohlenstoffatomen steht, die Summe aller x Null bis 100 beträgt, y für 1 bis 7 steht, A¹ für Hydroxy oder C₁-C₄-Alkoxy steht, wenn y für 1 steht, oder A¹ von einem C₃-C₇-Polyol abgeleitetet ist, wenn y für 2 bis 7 steht.

13. Mittel nach Anspruch 12, wobei die Komponente (f1) ausgewählt ist unter Rizinusölpolyethoxylaten, Sorbitolpolyethoxyoleaten, Sorbitolpolyethoxyisostearaten und Gemischen davon.

14. Mittel nach einem der vorhergehenden Ansprüche, umfassend
(g) mindestens einen weiteren Hilfsstoff, die ausgewählt ist unter
(g1) Calcium-Salzen
(g2) Chelatbildnern
(g3) Harnstoff.
(g4) weiteren Lösungs- oder Verdünnungsmitteln.

15. Mittel nach Anspruch 1, umfassend
(a) 10 bis 70 Gew.-% wenigstens eines Wirkstoffs
(a1) N,N,N-Trimethyl-N-β-chlorethyl-ammoniumchlorid der Formel (Ia), 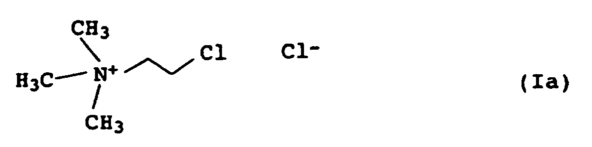 und/oder
(a2) N,N-Dimethylpiperidiniumchlorid der Formel (Ib) 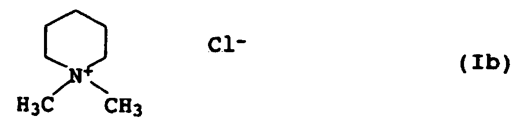
(b) 10 bis 60 Gew.-% Wasser;
(c) 5 bis 50 Gew.-% wenigstens eines gegebenenfalls Endgruppen-verschlossenen Ethylenoxid/Propylenoxid-Blockcopolymers der Formel (IVa);
R¹⁶O-(C₂H₄O)ₚ-(C₃H₆O)_{q}-(C₂H₄O)ᵣ-R¹⁷ (IVa)
wobei p, q, r, R¹⁶ und R¹⁷ die in Anspruch 8 genannten Bedeutungen haben;
(d) 5 bis 40 Gew.-% Ammoniumnitrat;
(e1) 0,5 bis 30 Gew.-% eines Wirkstoffs der Formel (IIa)

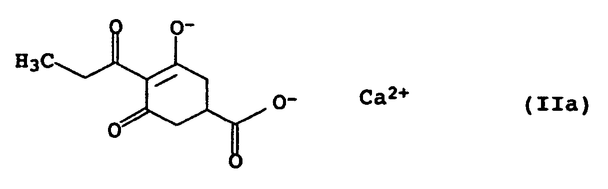

16. Verfahren zur Herstellung eines Mittels nach einem der vorhergehenden Ansprüche durch Zusammenfügen der Komponenten, **dadurch gekennzeichnet, daß** man ein Gemisch aus Ammoniumnitrat und Calciumcarbonat verwendet.

17. Verfahren nach Anspruch 16, **dadurch gekennzeichnet, daß** man Düngergranulat verwendet.

18. Verfahren nach einem der Ansprüche 16, **dadurch gekennzeichnet, daß** man zumindest einen Teil des Calciumcarbonats mit Säure umsetzt.

19. Verwendung von Ammoniumnitrat zur Homogenisierung eines Gemisches, umfassend
(a) wenigstens einen Wirkstoff der Formel (I) 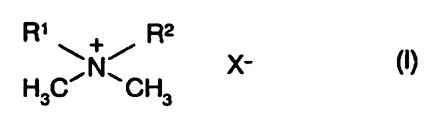 wobei R¹, R² und X wie in Anspruch 1 definiert sind;
(b) Wasser;
(c) wenigstens ein gegebenenfalls Endgruppen-verschlossenes Ethylenoxid/Propylenoxid-Blockcopolymer.

20. Verwendung eines Mittels nach einem der Ansprüche 1 bis 15 als Bioregulator im Pflanzenanbau, in der Landwirtschaft und im Gartenbau.

## Claims

1. A composition based on a homogeneous phase, comprising
(a) at least one active ingredient of the formula (I) 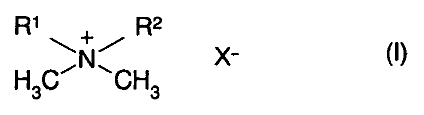 where R¹, R² and X have the following meanings:
R¹ is C₁-C₄-alkyl;
R² is C₁-C₄-alkyl, cyclopentenyl, halo-C₁-C₆-alkyl; or R¹ and R² together are a radical -(CH₂)₅-, -(CH₂)₂-O-(CH₂)₂- or -(CH₂)-CH=CH-(CH₂)-NH-;
X is an anionic group;
(b) water;
(c) at least one optionally end-capped ethylene oxide/propylene oxide block copolymer;
(d) ammonium nitrate.

2. A composition as claimed in claim 1, wherein the homogeneous phase has a density of at least 1.04 g/l, preferably of at least 1.07 g/l.

3. A composition as claimed in any of the preceding claims, wherein the active ingredient of the formula I is selected from among
(a1) N,N,N-trimethyl-N-β-chloroethylammonium chloride, of the formula (Ia), 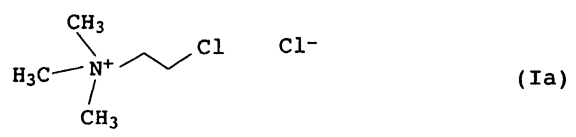
(a2) N,N-dimethylpiperidinium chloride, of the formula (Ib), 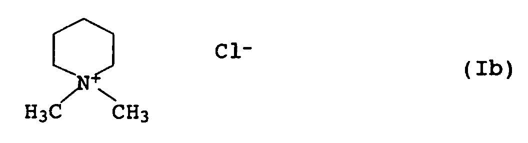 and
(a3) N,N-dimethylmorpholinium chloride, of the formula (Ic)

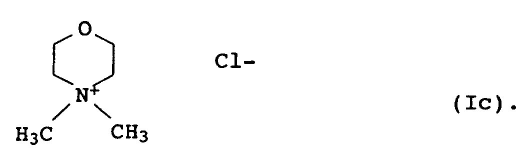

4. A composition as claimed in any of the preceding claims, wherein the optionally end-capped ethylene oxide/propylene oxide block copolymer is selected from among polymers of the formula (IVa)
R¹⁶O-(C₂H₄O)ₚ-(C₃H₆O)_{q}-(C₂H₄O)ᵣ-R¹⁷ (IVa)
or polymers of the formula (IVb)
R¹⁶O-(C₃H₆O)ₚ-(C₂H₄O)_{q}-(C₃H₆O)ᵣ-R¹⁷ (IVb)
where
p, q, r independently of one another correspond to a value in the range of from 3 to 250, preferably from 5 to 200 and in particular from 10 to 150 and R¹⁶, R¹⁷ independently of one another are hydrogen, C₁-C₄-alkyl and C₁-C₄-alkyl-CO.

5. A composition as claimed in any of the preceding claims, comprising
(e) at least one further bioregulator.

6. A composition as claimed in claim 5, comprising
(e1) at least one active ingredient of the formula (II) 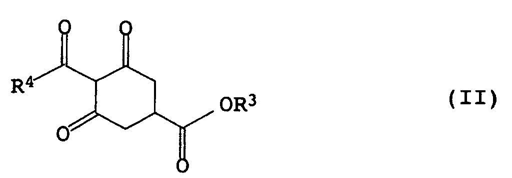 where R³ and R⁴ have the following meanings:
R³ is hydrogen, C₁-C₄-alkyl, C₁-C₄-alkyl-S-C₁-C₄-alkyl, phenyl, substituted phenyl;
R⁴ is C₁-C₄-alkyl, C₃-C₆-cycloalkyl, benzyl, substituted benzyl, phenethyl, phenoxymethyl, 2-thienylmethyl, C₁-C₄-alkoxymethyl, C₁-C₄-alkylthiomethyl;
or an agriculturally useful salt thereof.

7. A composition as claimed in claim 6, wherein the radical R⁴ represents ethyl and the radical R³ represents hydrogen, C₁-C₄-alkyl or an agriculturally useful cation.

8. A composition as claimed in claim 7, wherein the active ingredient of the formula II is prohexadione-calcium, of the formula (IIa)

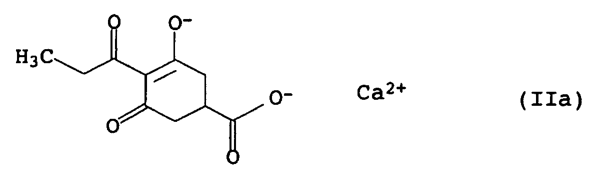

9. A composition as claimed in any of claims 5 to 8, comprising
(e2) at least one active ingredient of the formula (IIIa) 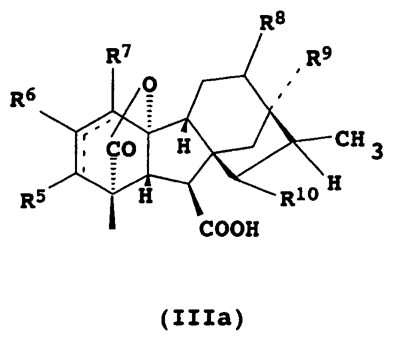 where the radicals R⁵, R⁶, R⁷, R⁸, R⁹ and R¹⁰ independently of one another are hydrogen or hydroxyl and the broken line denotes an optional double bond either between the carbon atoms in positions 1 and 2 or between the carbon atoms in positions 2 and 3;
and/or at least one active ingredient of the formula (IIIb) 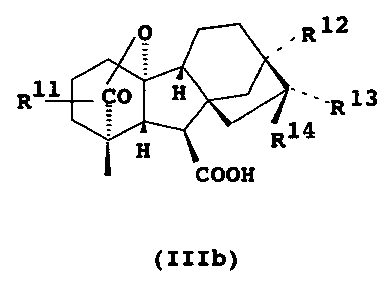 where R¹¹ indicates that ring A (i) has no further functionality, or (ii) has a 1,2-double bond or a 2,3-double bond or (iii) has OH, F, Cl or Br in position 3α or 3β, it being possible for a 1,2-double bond to be present or not, or (iv) has OH, F, Cl or Br in position 1α or 1β, it being possible for a 2,3-double bond to be present or not;
R¹² is H or OH, OC(=O)R¹⁵ or OR¹⁵;
R¹³, R¹⁴ independently of one another are H, F, Cl, Br, C₁-C₆-alkyl, C₂-C₆-alkenyl, C₃-C₆-cycloalkyl or CH₂X, where X is F, Cl or Br;
R¹⁵ is C₁-C₆-alkyl.

10. A composition as claimed in claim 9, wherein the active ingredient of the formula (IIIb) is exo-16,17-dihydro-GA5-13-acetate, of the formula (IIIc)

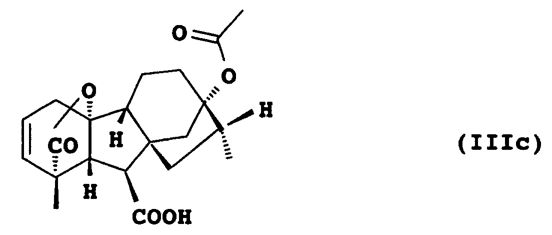

11. A composition as claimed in any of the preceding claims, comprising
(f) at least one further surfactant.

12. A composition as claimed in claim 11, wherein the surfactant is selected from among
(f1) nonionic surfactants of the formula (V),
[R¹⁸-CO-(EO)ₓ-]_{y}A¹ (V)
where R¹⁸ is a straight-chain or branched, saturated or unsaturated, unhydroxylated, monohydroxylated or dihydroxylated aliphatic radical having 8 to 30 carbon atoms, the total of all x is zero to 100, y is 1 to 7, A¹ is hydroxyl or C₁-C₄-alkoxy if y is 1 or A¹ is derived from a C₃-C₇-polyol if y is 2 to 7.

13. A composition as claimed in claim 12, wherein component (fl) is selected from among castor oil polyethoxylates, sorbitol polyethoxyoleates, sorbitol polyethoxyisostearates and mixtures of these.

14. A composition as claimed in any of the preceding claims, comprising
(g) at least one further auxiliary selected from among
(g1) calcium salts
(g2) chelating agents
(g3) urea
(g4) further solvents or diluents.

15. A composition as claimed in claim 1, comprising
(a) 10 to 70% by weight of at least one active ingredient
(a1) N,N,N-trimethyl-N-β-chloroethylammonium chloride, of the formula (Ia), 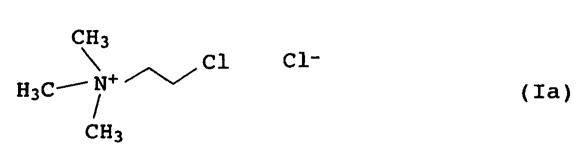 and/or
(a2) N,N-dimethylpiperidinium chloride, of the formula (Ib), 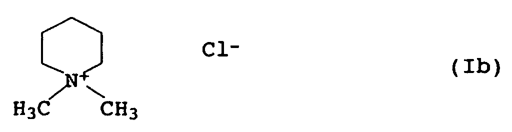
(b) 10 to 60% by weight of water;
(c) 5 to 50% by weight of at least one optionally end-capped ethylene oxide/propylene oxide block copolymer of the formula (IVa);
R¹⁶O-(C₂H₄O)ₚ-(C₃H₆O)_{q}-(C₂H₄O)ᵣ-R¹⁷ (IVa)
where p, q, r, R¹⁶ and R¹⁷ have the meanings mentioned in claim 8;
(d) 5 to 40% by weight of ammonium nitrate; and
(e1) 0.5 to 30% by weight of an active ingredient of the formula (IIa)

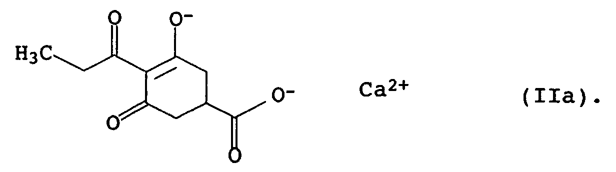

16. A process for the preparation of the composition as claimed in any of the preceding claims by combining the components, wherein a mixture of ammonium nitrate and calcium carbonate is used.

17. A process as claimed in claim 16, wherein fertilizer granules are used.

18. A process as claimed in claim 16, wherein at least some of the calcium carbonate is reacted with acid.

19. The use of ammonium nitrate for homogenizing a mixture comprising
(a) at least one active ingredient of the formula (I) 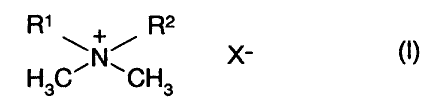 where R¹, R² and X are as defined in claim 1;
(b) water;
(c) at least one optionally end-capped ethylene oxide/propylene oxide block copolymer.

20. The use of a composition as claimed in any of the preceding claims as bioregulator in plant production, in agriculture or in horticulture.

## Revendications

1. Agent à base d'une phase homogène, comprenant
(a) au moins une substance active de formule (I) 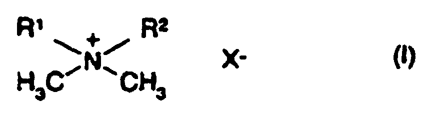 où R¹, R² et X ont les significations suivantes :
R¹ représente un groupe alkyle en C₁ à C₄ ;
R² représente un groupe alkyle en C₁ à C₄, un groupe cyclopentényle, un groupe halogénoalkyle en C₁ à C₆ ; ou R¹ et R² représentent ensemble un radical -(CH₂)₅-, -(CH₂)₂-O-(CH₂)₂- ou -(CH₂)-CH=CH-(CH₂)-NH- ;
X représente un groupe anionique ;
(b) de l'eau ;
(c) au moins un copolymère séquence d'oxyde d'éthylène / oxyde de propylène éventuellement fermé par des groupes terminaux ;
(d) du nitrate d'ammonium.

2. Agent selon la revendication 1, **caractérisé en ce que** la phase homogène présente une densité d'au moins 1,04 g/l, de préférence d'au moins 1,07 g/l.

3. Agent selon l'une quelconque des revendications précédentes, **caractérisé en ce que** la substance active de formule I est choisie parmi
(a1) le chlorure de N,N,N-triméthyl-N-β-chloréthylammonium de formule (Ia) 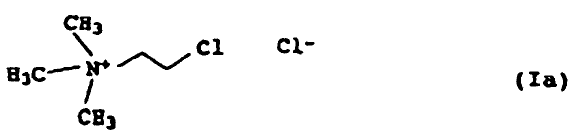
(a2) le chlorure de N,N-diméthylpipéridinium de formule (Ib) 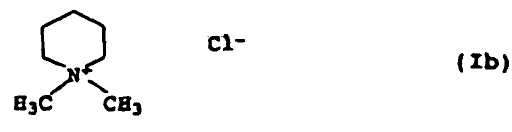 et
(a3) le chlorure de N,N-diméthylmorpholinium de formule (Ic)

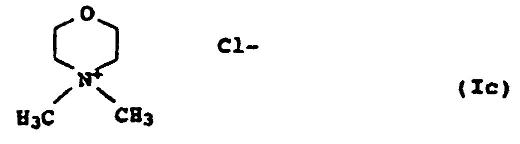

4. Agent selon l'une quelconque des revendications précédentes, **caractérisé en ce que** le copolymère séquence d'oxyde d'éthylène / oxyde de propylène éventuellement fermé par des groupes terminaux est choisi parmi les polymères de formule (IVa)
R¹⁶O-(C₂H₄O)ₚ-(C₃H₆O)_{q}-(C₂H₄O)ᵣ-R¹⁷ (IVa)
ou les polymères de formule (IVb)
R¹⁶O-(C₃H₆O)ₚ-(C₂H₄O)_{q}-(C₃H₆O)ᵣ-R¹⁷ (IVb)
où
p, q, r représentent indépendamment l'un de l'autre une valeur dans la plage de 3 à 250, de préférence de 5 à 200 et en particulier de 10 à 150 et R¹⁶ et R¹⁷ représentent indépendamment l'un de l'autre un atome d'hydrogène, un groupe alkyle en C₁ à C₄ et un groupe (alkyle en C₁ à C₄)-CO.

5. Agent selon l'une quelconque des revendications précédentes, comprenant
(e) au moins un autre biorégulateur.

6. Agent selon la revendication 5, comprenant
(e1) au moins une substance active de formule (II) 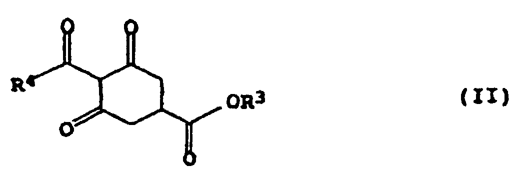 où R³ et R⁴ ont les significations suivantes :
R³ représente un atome d'hydrogène, un groupe alkyle en C₁ à C₄, un groupe (alkyle en C₁ à C₄)-S-(alkyle en C₁ à C₄), un groupe phényle, un groupe phényle substitué ;
R⁴ représente un groupe alkyle en C₁ à C₄, un groupe cycloalkyle en C₃ à C₆, un groupe benzyle, un groupe benzyle substitué, un groupe phénéthyle, un groupe phénoxyméthyle, un groupe 2-thiénylméthyle, un groupe (alcoxy en C₁ à C₄)méthyle, un groupe (alkyle en C₁ à C₄)thiométhyle ;
ou un sel utilisable en agriculture de celui-ci.

7. Agent selon la revendication 6, **caractérisé en ce que** les radicaux R⁴ représentent un groupe éthyle et R³ un atome d'hydrogène, un groupe alkyle en C₁ à C₄ ou un cation utilisable en agriculture.

8. Agent selon la revendication 7, **caractérisé en ce que** la substance active de formule II est le prohexadione-calcium de formule (IIa)

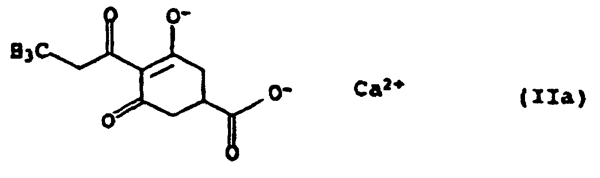

9. Agent selon l'une quelconque des revendications 5 à 8, comprenant (e2) au moins une substance active de formule (IIIa) 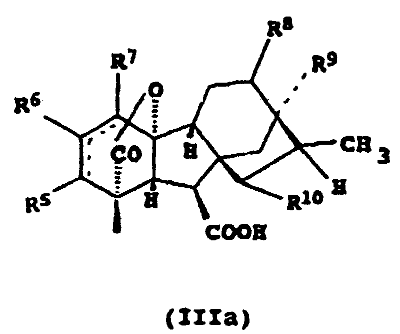 dans laquelle les radicaux R⁵, R⁶, R⁷, R⁸, R⁹ et R¹⁰ représentent, indépendamment l'un de l'autre un atome d'hydrogène ou un groupe hydroxyle et la ligne en pointillés représente une double liaison éventuelle entre les atomes de carbone en position 1 et 2 ou entre les atomes de carbone en position 2 et 3 ;
et/ou au moins une substance active de formule (IIIb) 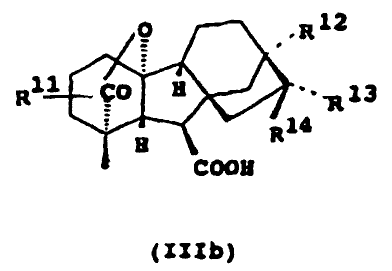 dans laquelle R¹¹ indique que le cycle A (i) ne présente pas d'autre fonctionnalité ou (ii) présente une double liaison 1,2 ou une double liaison 2,3 ou (iii) présente un groupe OH 3α ou 3β, un atome de F, un atome de Cl ou un atome de Br, une double liaison 1,2 pouvant être présente ou non, ou (iv) présente un groupe OH 1α ou 1β, un atome de F, un atome de Cl ou un atome de Br, une double liaison 2,3 pouvant être présente ou non ;
R¹² représente un atome d'hydrogène ou un groupe OH, un groupe OC(=O)R¹⁵ ou un groupe OR¹⁵ ;
R¹³, R¹⁴ représentent indépendamment l'un de l'autre un atome d'hydrogène, un atome de F, un atome de Cl, un atome de Br, un groupe alkyle en C₁ à C₆, un groupe alcényle en C₂ à C₆, un groupe cycloalkyle en C₃ à C₆ ou un groupe CH₂X, X représentant un atome de F, un atome de Cl ou un atome de Br ; R¹⁵ represente un groupe alkyle en C₁ à C₆.

10. Agent selon la revendication 9, **caractérisé en ce que** la substance active de formule (IIIb) est le 13-acétate d'exo-16,17-dihydro-GA5 de formule (IIIc)

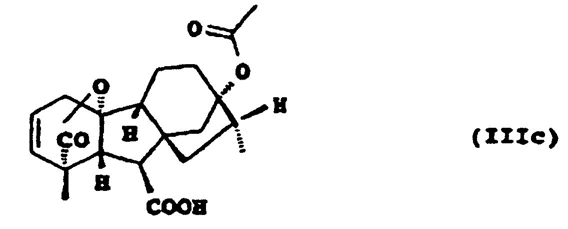

11. Agent selon l'une quelconque des revendications précédentes, comprenant
(f) au moins un autre agent tensioactif.

12. Agent selon la revendication 11, **caractérisé en ce que** l'agent tensioactif est choisi parmi
(f1) les agents tensioactifs non ioniques de formule (V),
[R¹⁸-CO-(EO)ₓ-]_{y}A¹ (V)
où R¹⁸ représente un radical aliphatique linéaire ou ramifié, saturé ou insaturé, le cas échéant monohydroxylé ou dihydroxylé comprenant 8 à 30 atomes de carbone, la somme de tous les x vaut 0 à 100, y représente 1 à 7, A¹ représente un groupe hydroxy ou un groupe alcoxy en C₁ à C₄ lorsque y représente 1 ou A¹ est dérivé d'un polyol en C₃ à C₇ lorsque y représente 2 à 7.

13. Agent selon la revendication 12, où le composant (f1) est choisi parmi les polyéthoxylates d'huile de ricin, les polyéthoxyoléates de sorbitol, les polyéthoxyisostéarates de sorbitol et les mélanges de ceux-ci.

14. Agent selon l'une quelconque des revendications précédentes, comprenant
(g) au moins un autre adjuvant, choisi parmi
(g1) les sels calciques
(g2) les chélatants
(g3) l'urée
(g4) d'autres solvants ou diluants.

15. Agent selon la revendication 1, comprenant
(a) 10 à 70% en poids d'au moins une substance active
(a1) chlorure de N,N,N-triméthyl-N-β-chloréthylammonium de formule (la), 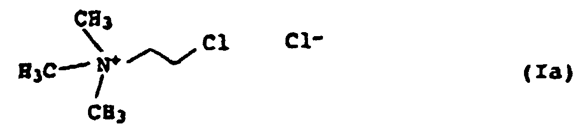 et/ou
(a2) chlorure de N,N-diméthylpipéridinium de formule (Ib) 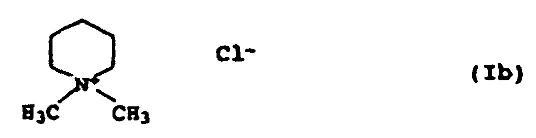
(b) 10 à 60% en poids d'eau ;
(c) 5 à 50% en poids d'au moins un copolymère séquence d'oxyde d'éthylène / oxyde de propylène éventuellement fermé par des groupes terminaux de formule (IVa)
R¹⁶O-(C₂H₄O)ₚ-(C₃H₆O)_{q}-(C₂H₄O)ᵣ-R¹⁷ (IVa)
p, q, r, R¹⁶ et R¹⁷ ayant les significations mentionnées dans la revendication 8 ;
(d) 5 à 40% en poids de nitrate d'ammonium ;
(e1) 0,5 à 30% en poids d'une substance active de formule (IIa)

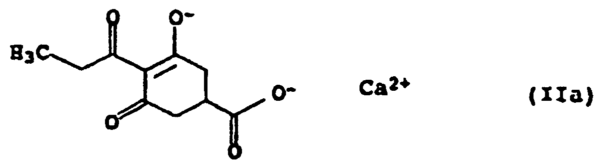

16. Procédé pour la préparation d'un agent selon l'une quelconque des revendications précédentes par assemblage des composants, **caractérisé en ce qu'**on utilise un mélange de nitrate d'ammonium et de carbonate de calcium.

17. Procédé selon la revendication 16, **caractérisé en ce qu'**on utilise un granulat d'engrais.

18. Procédé selon la revendication 16, **caractérisé en ce qu'**on transforme au moins une partie du carbonate de calcium avec de l'acide.

19. Utilisation de nitrate d'ammonium pour l'homogénéisation d'un mélange comprenant
(a) au moins une substance active de formule (I) 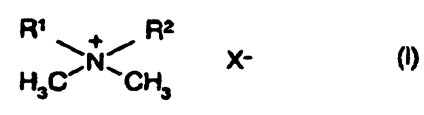 R¹, R² et X étant définis comme dans la revendication 1 ;
(b) de l'eau ;
(c) au moins un copolymère séquence d'oxyde d'éthylène / oxyde de propylène éventuellement fermé par des groupes terminaux.

20. Utilisation d'un agent selon l'une quelconque des revendications 1 à 15 comme biorégulateur dans la culture des plantes, dans l'agriculture ou l'horticulture.
